# EUROPEAN PATENT SPECIFICATION

(11) **EP 2 489 708 B1**
(45) Date of publication and mention of the grant of the patent: **20.08.2014**
(21) Application number: 12155164.2
(22) Date of filing: 13.02.2012
(51) Int. Cl.: C09D 11/00

(54) **Inkjet ink composition and method for producing the same, and inkjet recording method**
Tintenstrahlzusammensetzung und Verfahren zu deren Herstellung sowie Tintenstrahlaufzeichnungsverfahren
Composition d'encre par jet d'encre et son procédé de production et procédé d'enregistrement par jet d'encre

(30) Priority: 16.02.2011 JP 2011030588; 30.01.2012 JP 2012017080
(43) Date of publication of application: 22.08.2012
(73) Proprietor: Fujifilm Corporation, Minato-ku Tokyo (JP)
(72) Inventor: Umebayashi, Tsutomu, Kanagawa (JP)
(74) Representative: Morpeth, Fraser Forrest

(56) References cited:
- EP-A1- 2 130 881
- EP-A1- 2 284 229
- DATABASE WPI Week 200354 Thomson Scientific, London, GB; AN 2003-572758 XP002675185, & JP 2003 119414 A (TOYO INK MFG CO LTD) 23 April 2003 (2003-04-23)

## Description

### BACKGROUND OF THE INVENTION

### 1. Field of the Invention

The present invention relates to an inkjet ink composition, a method for producing the same and an inkjet recording method.

### 2. Description of the Related Art

Inkjet methods in which an ink composition is ejected dropwise from an ink ejection outlet are used for various printers due to small size, low price and the possibility of forming an image on a subject to be recorded in a non-contact manner and the like. Of these inkjet methods, a piezo inkjet method in which an ink is ejected using modification of piezoelectric devices, and a thermal inkjet method in which an ink composition is ejected dropwise using a boiling phenomenon of an ink composition due to thermal energy exhibit superior high resolution and a high-rate printing property.

Recently, commercial printing apparatuses or industrial printing apparatuses using an inkjet printer as well as photo-printing or document printing for household or office applications were developed. In particular, wide format inkjet printers suitable for large advertisement printing adhered to the walls of show windows, station passages, buildings and the like are being rapidly developed.

Conventional ink compositions are described in JP 2006-169419A, JP 2004-2528A, JP 2007-262382A and JP 2010-13630A. Other ink compositions are disclosed in EP 2284229 and JP2003-119414.

### SUMMARY OF THE INVENTION

An object of the present invention is to provide an inkjet ink composition with superior storage stability and re-dispersibility, a method for producing the same and an inkjet recording method.

The inkjet ink composition obtained by accomplishing the object contains an organic pigment and a basic polymer dispersant, wherein the organic pigment contains a benzimidazolone-based pigment or a bisacetoacetarylide-based pigment, and the basic polymer dispersant includes a polymer dispersant having a weight average molecular weight of 10,000 to 80,000 (dispersant A), and a polymer dispersant having a weight average molecular weight of 100,000 to 200,000 (dispersant B).

In a preferred embodiment of the present invention, the dispersant A and the dispersant B may be polymer dispersants having an amino group on a main chain or a side chain, respectively, and the dispersant B may be a polymer dispersant having a constituent unit represented by the following formula (1): 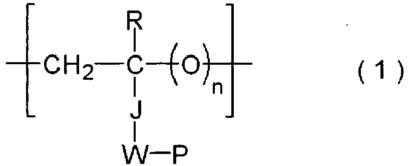 In formula (1), R represents a hydrogen atom or a methyl group, J represents -CO-, -COO-, -OCO-, a methylene group or a phenylene group, n represents 0 or 1, W represents a single bond or a bivalent linking group, and P represents a pigment-like residue obtained by removing one hydrogen atom from the structure selected from the group consisting of quinacridone, benzimidazolone, indole, quinoline, carbazole, acridine, acridone, anthraquinone, phthalimide, and naphthalimide.

Also, in a preferred embodiment of the present invention, P may be the pigment-like residue obtained by removing one hydrogen atom from the structure selected from the group consisting of acridone and phthalimide, the dispersant A may be a polymer dispersant that does not have a structure selected from the group consisting of quinacridone, benzimidazolone, indole, quinoline, carbazole, acridine, acridone, anthraquinone, phthalimide, and naphthalimide, and the inkjet ink composition may further contain at least one selected from the group consisting of N-vinyl caprolactam, 2-phenoxyethyl acrylate, and 2-(2-ethoxyethoxy)ethyl acrylate, wherein the total content of N-vinyl caprolactam, 2-phenoxyethyl acrylate, and 2-(2-ethoxyethoxy)ethyl acrylate is 20% by mass or more, with respect to the total mass of the inkjet ink composition.

Also, in a preferred embodiment of the present invention, the organic pigment may be a bisacetoacetarylide-based pigment, the bisacetoacetarylide-based pigment may be a pigment yellow 155 and the inkjet ink composition may further comprise a polymerization initiator.

The present invention also includes a method for producing an inkjet ink composition including: mixing a polymer dispersant (dispersant A) having a weight average molecular weight of 10,000 to 80,000, a polymerizable compound, and a benzimidazolone-based pigment or bisacetoacetarylide-based pigment to prepare a preliminary dispersion liquid A having a pigment concentration of 20 to 40% by mass; subjecting the preliminary dispersion liquid A to pigment dispersion treatment to prepare a pigment dispersion liquid A having a volume average particle diameter of the pigment of 300 nm or less; and mixing a polymer dispersant (dispersant B) having a weight average molecular weight of 100,000 to 200,000 with the pigment dispersion liquid A.

In a preferred embodiment, the dispersant A and the dispersant B may be polymer dispersants having an amino group on a main chain or a side chain, respectively, and the dispersant B may be a polymer dispersant having a constituent unit represented by the following formula (2): 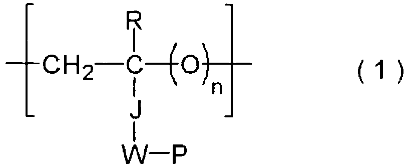 In formula (2), R represents a hydrogen atom or a methyl group, J represents -CO-, -COO-, -OCO-, a methylene group or a phenylene group, n represents 0 or 1, W represents a single bond or a bivalent linking group, and P represents a pigment-like residue obtained by removing one hydrogen atom from the structure selected from the group consisting of quinacridone, benzimidazolone, indole, quinoline, carbazole, acridine, acridone, anthraquinone, phthalimide, and naphthalimide.

In an embodiment of the present invention, P may be a pigment-like residue obtained by removing one hydrogen atom from the structure selected from the group consisting of acridone and phthalimide, and the dispersant A may be a polymer dispersant that does not have a structure selected from the group consisting of quinacridone, benzimidazolone, indole, quinoline, carbazole, acridine, acridone, anthraquinone, phthalimide, and naphthalimide.

The present invention also includes an inkjet recording method including: (a¹) ejecting the inkjet ink composition according to any one of claims 1 to 9 or the inkjet ink composition prepared by the method according to any one of claims 10 to 14 on a medium to be recorded; and (b¹) irradiating the ejected inkjet ink composition with an active radiation to cure the inkjet ink composition.

According to the present invention, it is possible to provide an inkjet ink composition with superior storage stability and re-dispersibility and a method for producing the same, and an inkjet recording method.

### DESCRIPTION OF THE PREFERRED EMBODIMENTS

Hereinafter, the present invention will be described in detail.

In addition, in this specification, "xx to yy" refers to a value range that includes xx and yy. In addition, "(component A) organic pigment" or the like is simply referred to as a "component A" or the like, and "pigment yellow 120" or the like is also referred to as a "Pigment Yellow 120", "P. Y 120" or "PY120". In addition, "(meth)acrylate" has the same meaning as "acrylate and/or methacrylate", and the same will be used in the following.

### (Inkjet ink composition)

The inkjet ink composition of the present invention (hereinafter, simply referred to as "ink composition" or "ink") contains an organic pigment, and a basic polymer dispersant, the organic pigment contains a benzimidazolone-based pigment or a bisacetoacetarylide-based pigment, and the basic polymer dispersant contains a polymer dispersant (dispersant A) having a weight average molecular weight of 10,000 to 80,000, and a polymer dispersant (dispersant B) having a weight average molecular weight of 100,000 to 200,000. In addition, in this specification, the weight average molecular weight (Mw) is defined by well-known methods. For example, the weight average molecular weight (Mw) is measured as a value in terms of polystyrene that is obtained by measuring GPC (solvent: N-methyl pyrrolidone (10 mM LiBr), column: particulate gel made of hydrophilic vinyl polymer as a base material, column temperature: 40°C, flow rate: 0.5 mL/min, sample concentration: 0.1 wt%, injection amount: 60 µL, detector: RI) using an apparatus such as HLC-8220 GPC (manufactured by Tosoh Corporation). The weight average molecular weight of the basic polymer dispersant may be selected from catalog values.

The ink composition of the present invention is a non-aqueous radically curable ink composition.

The ink composition of the present invention is preferably an oily ink composition that can be cured by radioactive ray. In addition, the ink composition of the present invention is preferably a non-solvent ink composition that does not contain a volatile organic solvent. "radioactive ray" is radiation that can impart energy generating initiation species in an ink composition by irradiation thereof, and includes α-rays, γ-rays, X-rays, ultraviolet rays, visible rays and an electron beam and the like. Of these, in terms of curing sensitivity and easy availability of devices, ultraviolet rays and an electron beam are preferred, and ultraviolet rays are more preferred.

In addition, the inkjet ink composition of the present invention is suitable for use as a yellow inkjet ink composition.

The inkjet ink composition of the present invention contains a benzimidazolone-based pigment or a bisacetoacetarylide-based pigment. The benzimidazolone-based pigment or bisacetoacetarylide-based pigment that is commercially available and thus easily obtained commonly has an acidic group on the surface thereof due to surface treatment or the like. In this case, the entirety of the surface is not only covered with acidic adsorption sites and but also a part of the surface is composed of molecules of the benzimidazolone-based pigment or bisacetoacetarylide-based pigment.

It may be considered that the dispersant A is adsorbed in an ink composition via coordination by a basic group such as a nitrogen atom of an amino group, or when an acidic group is present on the surface of organic pigment particles, and the dispersant A is adsorbed by acid-base interaction between acidic groups on the surface and the basic groups.

In addition, the dispersant B is adsorbed on organic pigment particles in the ink composition via Van-der-Waals interaction between pigment-like residues and molecules of benzimidazolone-based pigment or bisacetoacetarylide-based pigment on the particle surface.

The present inventors discovered that, in particular, storage stability and re-dispersibility are deteriorated when the conventional inkjet ink composition contains a benzimidazolone-based pigment or a bisacetoacetarylide-based pigment. In addition, as a result of detailed research, the inventors discovered that an inkjet ink composition with superior storage stability and re-dispersibility can be obtained by using the benzimidazolone-based pigment or bisacetoacetarylide-based pigment, and the dispersant A and dispersant B.

### <Organic pigment>

The inkjet ink composition of the present invention contains an organic pigment and the organic pigment contains a benzimidazolone-based pigment or a bisacetoacetarylide-based pigment.

Examples of the benzimidazolone-based pigment include P. Y. 120, P. Y 151, P. Y 154, P. Y. 175, P. Y 180, P. Y 181, P. Y 194 and the like, and P. Y. 120, P. Y. 151 and P. Y 180 are preferred since benzimidazolone-based pigments having a particle size distribution that has a preferred inkjet ejection property are readily obtained.

Examples of the bisacetoacetarylide-based pigment include P. Y. 16, P. Y 155, P. Y. 198 and the like, and P. Y. 155 is preferred since benzimidazolone-based pigments having a particle size distribution that has a preferred inkjet ejection property are readily obtained.

Of these, P. Y 155 is particularly preferred as an organic pigment in terms of color development and weather resistance.

The organic pigment may be used singly or in combination of two or more types.

The content of organic pigment in the ink composition of the present invention greatly depends on the types of pigment used, and system conditions of a mounted inkjet printer, and is preferably 1% by mass to 20% by mass with respect to the total mass of the ink composition when a general printer is used. Within this range, sufficient color development can be obtained. In addition, the content is more preferably 5% by mass to 15% by mass, particularly preferably 6% by mass to 13% by mass, from viewpoints of obtaining ejection stability or good color development.

In addition, the organic pigment in the inkjet ink composition of the present invention exhibits superior color development, as it has finer particles. For this reason, a weight average particle diameter (diameter) of the organic pigment is preferably 600 nm or less, is more preferably lower than 300 nm and is even more preferably lower than 100 nm. In addition, the weight average particle diameter is preferably 5 nm or more.

The maximum particle diameter of the pigment is preferably 3 µm or less, more preferably 1 µm or less. The particle diameter of the pigment may be adjusted by selection of dispersant and dispersion medium, and setting of dispersion conditions and filtration conditions or the like. In addition, flowability and storage stability of pigment dispersion can be maintained by controlling the particle diameter of the pigment.

The weight average particle diameter and maximum particle diameter of the pigment in the ink composition may be measured using a commercially available particle diameter meter (laser diffraction/scattering particle size distribution meter LA-920 manufactured by Horiba, Ltd.)) or the like.

### <Basic polymer dispersant>

The inkjet ink composition of the present invention contains a basic polymer dispersant and the basic polymer dispersant contains a polymer dispersant (dispersant A) having a weight average molecular weight of 10,000 to 80,000 and a polymer dispersant (dispersant B) having a weight average molecular weight of 100,000 to 200,000.

The polymer dispersant having a weight average molecular weight of 10,000 to 80,000 such as the dispersant A has a relatively low molecular weight, the difficulty in causing cross-linkage between pigments of respective dispersants and superior re-dispersibility. When a pigment-containing ink composition obtained by dispersing the dispersant A only is stored for a long time, there is a problem in which an increase in viscosity or particle diameter distribution readily occurs. In addition, re-dispersibility will be described in detail in the paragraph of the method for producing an inkjet ink composition, as mentioned below.

Meanwhile, the polymer dispersant having a weight average molecular weight of 100,000 to 200,000 such as the dispersant B is not readily detached from the pigment and can prevent an increase in viscosity or particle diameter distribution when the pigment-containing ink composition is stored for a long time. When the pigment-containing ink composition obtained by dispersing the dispersant B only is stored for a long time, cross-linkage between pigments of respective dispersants readily occurs and time is frequently required for redispersion in many cases. In particular, the pigment suitable for the inkjet ink composition having a pigment particle diameter of about 100 nm has a great re-dispersibility problem.

The inkjet ink composition of the present invention can provide an inkjet ink composition with superior storage stability and re-dispersibility by using a combination of the dispersant A and the dispersant B.

The basic polymer dispersant is a polymer dispersant that has at least a basic group.

Examples of the basic group include an amino group, an imino group, an amide group, an imide group, a nitrogen-containing heterocyclic group and the like.

In addition, the basic group may be present in a main chain and/or a side chain of the polymer dispersant.

Of these, the dispersant A and the dispersant B are preferably polymer dispersants that have an amino group on the main chain or side chain thereof, are more preferably polymer dispersants having a secondary or tertiary amino group on the main chain or side chain thereof, and even more preferably, polymer dispersants having a secondary or tertiary alkylamino group on the main chain or side chain thereof, from viewpoints of storage stability and re-dispersibility.

A concentration ratio (mass ratio) of the dispersant A and the dispersant B in the ink composition of the present invention is preferably dispersant A:dispersant B=30:70 to 70:30, particularly preferably 35:65 to 35:65 from a viewpoint of balance between dispersion stability and re-dispersibility.

When the dispersant A and the dispersant B are polymers having different structures, separation of the dispersant A and the dispersant B can be performed from the ink composition by a known method, and even if the dispersants A and B have the identical structures, a mass ratio thereof can be obtained by determination of quantity of weight average molecular weight peaks calculated by measurement of gel permeation chromatography (GPC) or separation through GPC or the like.

The total content of the dispersant A and the dispersant B in the ink composition of the present invention is preferably 10 to 60% by mass, particularly preferable 20 to 50% by mass with respect to the content of the organic pigment from a viewpoint of easily and suitably controlling dispersion stability and viscosity of ink composition.

Hereinafter, the structures of the dispersant A and the dispersant B that can be particularly suitable for use in the present invention will be described in detail.

- Polymer dispersant (dispersant A) having weight average molecular weight of 10,000 to 80,000 -

The inkjet ink composition of the present invention contains a polymer dispersant (dispersant A) having a weight average molecular weight of 10,000 to 80,000.

The dispersant A preferably has the following structure from a viewpoint of superior adsorbability to a benzimidazolone-based pigment or bisacetoacetarylide-based pigment that is commercially available and can be readily obtained.

In addition, the dispersant A is preferably adsorbed based on an acidity of the surface of the pigment and has the ability of preventing reaggregation. For this reason, the dispersant preferably has a structure having an amine moiety on a main or side chain thereof. In addition, examples of preferred structures include end-modified polymers, graft polymers, and block polymers having an anchor moiety on the surface of the pigment.

Specific examples of preferred dispersants A include amine-modified vinyl polymer salts of polyaminoamide and acid ester, polymers such as modified-polyethyleneimine, modified-polyallylamine and the like.

Since the dispersant A is particularly adsorbed based on the acidity of the surface of the pigment, the amino group of the main chain or the side chain is preferably a strongly basic amino group, and is particularly preferably a secondary or tertiary alkylamino group.

Although polymers that can be preferably used as the dispersant A have been described above, the present invention is not limited thereto.

The polymer that can be preferably used as the dispersant A is preferably a polymer or copolymer of monomers having an amino group and an ethylenical double bond and is more preferably a copolymer of monomers having an amino group and an ethylenical double bond.

Examples of the monomer having an amino group and an ethylenical double bond include N,N-dimethylamino ethyl (meth)acrylate, N,N-dimethylamino propyl (meth)acrylate, 1-(N,N-dimethylamino)-1,1-dimethylmethyl (meth)acrylate, N,N-dimethylaminohexyl (meth)acrylate, N,N-diethylaminoethyl (meth)acrylate, N,N-diisopropylaminoethyl (meth)acrylate, N,N-di-n-butylaminoethyl (meth)acrylate, N,N-di-i-butylaminoethyl (meth)acrylate, morpholino ethyl (meth)acrylate, piperidino ethyl (meth)acrylate, 1- piperidino ethyl (meth)acrylate, N,N-methyl-2-pyrrolidyl amino ethyl (meth)acrylate, and, N,N-methylphenyl amino ethyl (meth)acrylate (all of them are (meth)acrylates); (meth)acryloyl morpholine, piperidino (meth)acrylamide, N-methyl-2-pyrolidyl (meth)acrylamide, 2-(N,N-dimethylamino) ethyl (meth)acrylamide, 2-(N,N-diethylamino) ethyl (meth)acrylamide, 3-(N,N-diethylamino) propyl (meth)acrylamide, 3-(N,N-dimethylamino) propyl (meth)acrylamide, 1-(N,N-dimethylamino)-1,1-dimethylmethyl (meth)acrylamide, and, 6-(N,N-diethylamino) hexyl (meth)acrylamide (all of them are (meth)acrylamides); p-vinylbenzyl-N,N-dimethylamine, p-vinylbenzyl-N,N-diethylamine, and p-vinylbenzyl-N,N-dihexylamine (all of them are vinylbenzylamines); 2-vinylpyridine, 4-vinylpyridine, and N-vinylimidazole. Of these, N,N-dimethylamino ethyl (meth)acrylate, N,N-dimethylamino propyl (meth)acrylate, 3-(N,N-diethylamino) propyl (meth)acrylamide, 3-(N,N-dimethylamino) propyl (meth)acrylamide and the like are preferred.

The monomer that can be copolymerized with the monomer having an amino group and an ethylenical double bond is not particularly limited so long as it is a monomer that can be copolymerized therewith and may be a well-known ethylenically unsaturated compound.

Examples of other monomers that can be copolymerized therewith include aromatic vinyl compounds (for example, styrene, α-methylstyrene, vinyl toluene, 2-vinyl pyridine, 4-vinyl pyridine, N-vinyl imidazole and the like), alkyl ester (meth)acrylates (for example, methyl (meth)acrylate, ethyl (meth)acrylate, n-butyl (meth)acrylate, i-butyl (meth)acrylate and the like), alkyl aryl ester methacrylates (for example, benzyl (meth)acrylate and the like), substituted-alkyl ester methacrylates (for example, glycidyl (meth)acrylate, 2-hydroxy ethyl (meth)acrylate and the like), vinyl ester carboxylates (for example, vinyl acetate and vinyl propionate), vinyl cyanide (for example, (meth)acrylonitrile and α-chloroacrylonitrile), aliphatic conjugated dienes (for example, 1,3-butadiene and isoprene), and unsaturated carboxylic acids (for example, (meth)acrylic acid, crotonic acid, itaconic acid, maleic acid and fumaric acid). Of these, unsaturated carboxylic acids, alkyl ester (meth)acrylates, alkyl aryl ester (meth)acrylates and vinyl ester carboxylates are preferred.

In addition, from a viewpoint of dispersion stabilization, the dispersant A is preferably a graft copolymer obtained by copolymerizing a polymeric oligomer having an ethylenically unsaturated double bond on the end thereof. The polymeric oligomer used for the dispersant A is a well-known polymeric oligomer in terms of affinity with the polymeric compound in the ink composition. The polymeric oligomers are preferably those described in the paragraphs of 0029 to 0039 of JP 2007-9117A.

In addition, the weight average molecular weight of the polymeric oligomer is preferably 300 to 10,000.

The dispersant A is preferably a graft copolymer obtained by copolymerizing a monomer having an amino group and an ethylenical double bond and a polymeric oligomer (macromonomer), or a copolymer copolymerizing an alkyl ester (meth)acrylate, and/or an aryl ester (meth)acrylate.

The dispersant A preferably has 2 to 50% by mass of a monomer unit having an amino group and an ethylenical double bond, more preferably, 5 to 30% by mass thereof with respect to the total mass of the dispersant A.

In addition, the dispersant A preferably contains 30 to 98% by mass of a constituent unit derived from the polymeric oligomer (macromonomer), more preferably 70 to 95% by mass, with respect to the total mass of the dispersant A.

When a monomer (other monomer) other than the monomer and a polymeric oligomer having an amino group is incorporated as a copolymerizable component, the monomer has 2 to 40% by mass of a monomer unit having an amino group and an ethylenical double bond, more preferably 5 to 20% by mass thereof with respect to the total mass of the dispersant A. Furthermore, the monomer preferably has 30 to 98% by mass of a polymeric oligomer (macromonomer)-derived constituent unit, more preferably 60 to 95% by mass thereof with respect to the total mass of the dispersant A.

Specific examples of the polymer obtained by vinyl polymerization that is preferably used as the dispersant A are given below and the present invention is not limited thereto. In addition, the composition ratio described below means an average value of mass ratio of monomer component contained in the molecule and the molecular weight is a weight average molecular weight in terms of polystyrene standards calculated by measurement of gel permeation chromatography (GPC), and a composition ratio or average molecular weight may be arbitrarily varied according to pigment, dispersion solvent and application within the scope that properties of the basic pigment dispersant are not impaired.
A-1: 3-dimethylamino propyl acrylamide/end-methacryloylated polymethyl methacrylate (AA-6, manufactured by Toagosei Co., Ltd.) copolymer (composition ratio 10:10:80, molecular weight 84,300)
A-2: N,N-dimethylamino propyl acrylamide/ethyl methacrylate/end-methacryloylated polybutyl acrylate (AB-6, manufactured by Toagosei Co., Ltd.)/methoxy polyethylene glycol monomethacrylate (Blemmer PME-4000, manufactured by NOF Corp.) copolymer (composition ratio 10:10:80, molecular weight 32,000)
A-3: N,N-dimethylamino ethyl methacrylate/end-acryloylated polycaprolactone (Placcel FA10L, manufactured by Daicel Chemical Industries, Ltd.) copolymer (composition ratio 10:10:80, molecular weight 62,000)
A-4: N,N-dimethylaminoethyl methacrylate/methyl methacrylate copolymer (composition ratio 10:10:80, molecular weight 42,000)

In addition, a commercially available product may be used as the dispersant A.

Specific examples of preferred commercially available dispersants of the dispersant A include SOLSPERSE 24000SC, SOLSPERSE 24000GR, SOLSPERSE 32000, SOLSPERSE 33000 (all of them manufactured by Lubrizol Corporation, Japan), TEGO Dispers 685 manufactured by Evonik GmbH, and Ajisper-PB-711, Ajisper-PB-821, Ajisper-PB-822 (all of them are manufactured by Ajinomoto Fine-Techno Co., Inc).

In the ink composition of the present invention, the dispersant A may be used alone or in combination of two or more types.

The content of the dispersant A in the ink composition of the present invention is preferably 1 to 80% by mass, more preferably 5 to 50% by mass, even more preferably 10 to 40% by mass, particularly preferably 10 to 30% by mass with respect to the content of the organic pigment.

In addition, the content of the dispersant A contained in the pigment dispersion liquid used for production of the ink composition (hereinafter "mill base" or "mill") is preferably 1 to 80% by mass, more preferably 5 to 50% by mass, even more preferably 10 to 40% by mass, particularly preferably 10 to 30% by mass, with respect to the content of the organic pigment.

- Polymer dispersant (dispersant B) having weight average molecular weight of 100,000 to 200,000 -

The inkjet ink composition of the present invention contains a polymer dispersant (dispersant B) having a weight average molecular weight of 100,000 to 200,000.

The dispersant B preferably has the following structure from a viewpoint of superior adsorbability to a benzimidazolone-based pigment or bisacetoacetarylide-based pigment that is commercially available and can be readily obtained.

In addition, the dispersant B is preferably adsorbed based on an acidity of the surface of the pigment and has the ability of preventing reaggregation. For this reason, the dispersant preferably has a structure having an amino group on a main or side chain thereof. In addition, examples of preferred structures include end-modified polymers, graft polymers, and block polymers having an anchor moiety on the surface of the pigment.

The dispersant B is preferably a polymer dispersant that has a constituent unit represented by the formula (1). 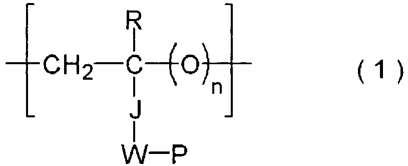 In formula (1), R represents a hydrogen atom or a methyl group, J represents -CO-, -COO-, -OCO-, a methylene group or a phenylene group, n represents 0 or 1, W represents a single bond or a bivalent linking group, and P represents a pigment-like residue obtained by removing one hydrogen atom from the structure selected from the group consisting of quinacridone, benzimidazolone, indole, quinoline, carbazole, acridine, acridone, anthraquinone, phthalimide, and naphthalimide (hereinafter, also referred to as a "pigment-like skeleton").

P in formula (1) is particularly preferably a pigment-like residue obtained by removing one hydrogen atom selected from the group consisting of acridone and phthalimide in terms of adsorbability on the surface of the pigment and easy availability of raw material.

Examples of the bivalent linking group represented by W in formula (1) include a straight, branched or cyclic alkylene group, an aralkylene group, an allylene group and the like, which may have a substituent.

The alkylene group represented by W is preferably an alkylene group having 1 to 10 carbon atoms, more preferably an alkylene group having 1 to 4 carbon atoms. Specific examples of the alkylene group include a methylene group, an ethylene group, a propylene group, a butylene group, a pentylene group, a hexylene group, an octylene group, and a decylene group. Of these, a methylene group, an ethylene group, and a propylene group are particularly preferable.

The aralkylene group represented by W is preferably an aralkylene group having 7 to 13 carbon atoms. Specific examples of the aralkylene group include a benzylidene group, a cinnamylidene group and the like.

The allylene group represented by W is preferably an allylene group having 6 to 12 carbon atoms. Specific examples of the allylene group include a phenylene group, cumenylene group, a mesitylene group, a tolylene group, a xylylene group and the like. Of these, a phenylene group is particularly preferred.

In addition, the bivalent linking group represented by W may contain a group derived from -COO-, -OCO-, -O-, or a heterocyclic ring in the center or the end of the linking group.

W is preferably a single bond, an alkylene group having 1 to 8 carbon atoms, an alkylene group having 1 to 8 carbon atoms containing -COO- and/or -O- in the center or the end thereof, or a 2-hydroxypropylene group.

In formula (1), J is preferably -COO- or a phenylene group.

In addition, in formula (1), n is preferably O.

The dispersant B may have a constituent unit other than the constituent unit represented by formula (1) and is particularly preferable a graft copolymer containing a constituent unit derived from a polymeric oligomer having an ethylenically unsaturated double bond on the end thereof (hereinafter, simply referred to as a "polymeric polymer"). The polymeric polymer having an ethylenically unsaturated double bond on the end thereof is referred to as a macromonomer since it is a compound having a predetermined molecular weight.

In addition, the weight average molecular weight of the polymeric oligomer is preferably 300 to 10,000.

Furthermore, the dispersant B is preferably a copolymer of a monomer having the pigment-like residue and a monomer having an amino group and an ethylenical double bond.

Examples of the monomer having an amino group and an ethylenical double bond include N,N-dimethylamino ethyl (meth)acrylate, N,N-dimethylamino propyl (meth)acrylate, 1-(N,N-dimethylamino)-1,1-dimethylmethyl (meth)acrylate, N,N-dimethylamino hexyl (meth)acrylate, N,N-diethylamino ethyl (meth)acrylate, N,N-diisopropylamino ethyl (meth)acrylate, N,N-di-n-butylaminoethyl (meth)acrylate, N,N-di-i-butylaminoethyl (meth)acrylate, morpholino ethyl (meth)acrylate, piperidino ethyl (meth)acrylate, 1-pyrrolidino ethyl (meth)acrylate, N,N-methyl-2-pyrrolidyl amino ethyl (meth)acrylate, and, N,N-methylphenyl amino ethyl (meth)acrylate (all of them are (meth)acrylates; (meth)acryloyl morpholine, piperidine (meth)acrylamide, N-methyl-2-pyrolidine (meth)acrylamide, 2-(N,N-dimethylamino)ethyl (meth)acrylamide, 2-(N,N-diethylamino)ethyl (meth)acrylamide, 3-(N,N-diethylamino)propyl (meth)acrylamide, 3-(N,N-dimethylamino)propyl (meth)acrylamide, 1-(N,N-dimethylamino)-1,1-dimethylmethyl (meth)acrylamide, and, 6-(N,N-diethylamino)hexyl (meth)acrylamide (all of them are (meth)acrylamides); p-vinylbenzyl-N,N-dimethylamine, p-vinylbenzyl-N,N-diethylamine, and p-vinylbenzyl-N,N-dihexylamine (all of them are vinylbenzylamines); 2-vinylpyridine, 4-vinylpyridine, and N-vinylimidazole. Of these, N,N-dimethylamino ethyl (meth)acrylate, N,N-dimethylamino propyl (meth)acrylate, 3-(N,N-diethylamino)propyl (meth)acrylamide, 3-(N,N-dimethylamino)propyl (meth)acrylamide and the like are preferred.

The dispersant B in the ink composition of the present invention may be used alone or in combination of two or more types.

The content of the dispersant B in the inkjet ink composition of the present invention is preferably 1 to 50% by mass, more preferably 5 to 40% by mass, even more preferably 10 to 30% by mass, particularly preferably 10 to 20% by mass, with respect to the content of the organic pigment.

### <Polymerizable compound>

The ink composition of the present invention preferably contains a polymerizable compound.

The polymerizable compound used for preparation of the ink composition of the present invention may be used for both a radical polymerizable compound and a cationic polymerizable compound.

In particular, the inkjet ink composition of the present invention contains as a polymerizable compound, at least one compound selected from the group consisting of N-vinyl caprolactam, 2-phenoxyethyl acrylate and 2-(2-ethoxyethoxy)ethyl acrylate and, when the content of these compounds is 20% by mass or more with respect to the total mass of the ink composition, the effect of dispersion stability is remarkable, and, in particular, when the content is 40% by mass or more, the effect of dispersion stability is remarkable.

In addition, furthermore, when 15% by mass or more of N-vinyl caprolactam is present as the polymerizable compound, the effect of dispersion stability is remarkable and in particular, when 20% by mass or more of N-vinyl caprolactam is present, the effect of dispersion stability is remarkable.

### -Radical polymerizable compound-

The radical polymerizable compound is a compound that has a radically polymerizable ethylenically unsaturated bond and may be any compound that has at least one radically polymerizable ethylenically unsaturated bond in the molecule, and includes a chemical structure such as monomer, oligomer and polymer. The radical polymerizable compound may be used alone or in combination of two or more types at a predetermined ratio to improve the intended properties.

Of these, the ink composition of the present invention preferably contains a radical polymerizable compound selected from the group consisting of a (meth)acrylate compound, a vinyl ether compound, and an N-vinyl compound. In addition, the radical polymerizable compound is more preferably a radical polymerizable compound selected from the group consisting of a (meth)acrylate compound, a vinyl ether compound, and an N-vinyl compound and is more preferably a (meth)acrylate compound. In addition, both or one of "acrylate" and "methacrylate" may be referred to as "(meth)acrylate" and both or one of "acryl", "methacryl" may be referred to as "(meth)acryl".

The radical polymerizable compound preferably includes a monofunctional (meth)acrylate compound having an aromatic group. The cyclic structure of the aromatic group of the monofunctional (meth)acrylate compound having an aromatic group may contain a hetero atom such as O, N and S.

Preferred examples of the aromatic cyclic structure of the monofunctional (meth)acrylate compound having an aromatic group include cyclic structures selected from the group consisting of benzene, naphthalene, anthracene, indene, fluorene, 1H-phenalene, phenanthrene, triphenylene, pyrene, naphthacene, tetraphene, biphenyl, as-indacene, s-indacene, acenaphthylene, fluoranthene, acephenanthrylene, aceanthrylene, chrysene, pleiadene, furan, thiophene, pyrroline, pyrazoline, imidazoline, isoxazoline, isothiazoline, pyridine, pyridazine, pyrimidine, pyrazine, triazole and tetrazole.

Of these, a particularly preferred monofunctional (meth)acrylate compound having an aromatic group is phenoxyethyl (meth)acrylate.

Examples of the polymerizable compound having a radically polymerizable ethylenically unsaturated bond include unsaturated carboxylic acids such as acrylic acid, methacrylic acid, itaconic acid, crotonic acid, isocrotonic acid, maleic acid and salts thereof, anhydrides having an ethylenically unsaturated group, acrylonitrile, styrene, radical polymerizable compounds such as various unsaturated polyesters, unsaturated polyether, unsaturated polyamide, and unsaturated urethane.

Specific examples include (meth)acrylic acid derivatives such as 2-(2-ethoxyethoxy)ethyl (meth)acrylate, norbornyl (meth)acrylate, isobornyl (meth)acrylate, 2-ethyl hexyl (meth)acrylate, 2-hydroxy ethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, methyl (meth)acrylate, n-butyl (meth)acrylate, lauryl (meth)acrylate, allyl

(meth)acrylate, glycidyl (meth)acrylate, dimethylamino methyl (meth)acrylate, bis(4-(meth)acryloxy polyethoxyphenyl) propane, neopentyl glycol di(meth)acrylate, 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol diacrylate, pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, tetramethylolmethane tetra(meth)acrylate, oligoester (meth)acrylate, 2, 2-bis(4-(meth)acryloxypolyethoxyphenyl)propane, N-methylol (meth)acrylamide, diacetone (meth)acrylamide, epoxy acrylate and derivatives of allyl compounds such as allyl glycidyl ether, diallyl phthalate, and triallyl trimellitate.

Of these, 2-(2-ethoxyethoxy)ethyl (meth)acrylate is preferred.

More specifically, radically polymerizable or crosslinking monomers, oligomers, and polymers that are commercially available products or are industrially known, such as those described in "Kakyozai Handobukku" (Crosslinking Agent Handbook), Ed. S. Yamashita (Taiseisha, 1981); "UV/EB Koka Handobukku (Genryohen)" (UV/EB Curing Handbook (Starting Materials)) Ed. K. Kato (Kobunshi Kankoukai, 1985); "UV/EB Koka Gijutsu no Oyo to Shijyo" (Application and Market of UV/EB Curing Technology), p. 79, Ed. Rad Tech (CMC, 1989); and E. Takiyama "Poriesuteru Jushi Handobukku" (Polyester Resin Handbook), (Nikkan Kogyo Shimbun Ltd., 1988) may be used.

In particular, regarding the ink composition used for a flexible medium to be recorded such as a PET film or PP film, use of a combination of a monofunctional (meth)acrylate compound and a multifunctional (meth)acrylate compound is preferred since flexibility is imparted to the film and adhesion and film strength are improved.

Vinyl ether compounds are preferable as the radical polymerizable compound and are broadly classified into monovinyl ether compounds and di- or tri-vinyl ether compounds.

Examples of preferred vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinylether, trimethylolpropane trivinyl ether; monovinyl ether compounds such as ethylene glycol monovinyl ether, triethylene glycol monovinyl ether, hydroxyethyl monovinyl ether, ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexane dimethanol monovinyl ether, n-propyl vinyl ether, isopropyl vinyl ether, isopropenyl vinyl ether, dodecyl vinyl ether, and diethylene glycol monovinyl ether.

In addition, the radical polymerizable compound preferably includes a multifunctional (meth)acrylate compound.

Examples of preferred multifunctional (meth)acrylate compounds include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, ethoxylated neopentyl glycol diacrylate, propoxylated neopentyl glycol diacrylate, pentaerythritol tri(meth)acrylate, pentaerythritol tetra (meth)acrylate, dipentaerythritol tetra(meth)acrylate, trimethylolethane tri(meth)acrylate; trimethylolpropane tri(meth)acrylate, and tetramethylolmethane tetra(meth)acrylate. Of these, dipropylene glycol di(meth)acrylate is particularly preferred.

The ink composition of the present invention may use N-vinyl lactam as an N-vinyl compound. Examples of preferred N-vinyl lactams include a compound represented by the following formula (N).

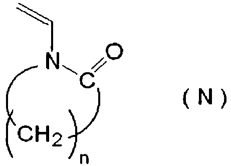

In formula (N), n represents an integer of 2 to 6, and is preferably an integer of 3 to 5, n is more preferably an integer of 3 or 5, and n is 5, from a viewpoint of a stretching property after the ink composition is cured, adhesion with a media to be recorded, and availability of raw material. That is, N-vinyl-ε-caprolactam is particularly preferable. N-vinyl-ε-caprolactam has superior stability and is thus generally used, can be obtained at a relatively low price, and can obtain particularly superior ink curability and adhesion of a cured film to a subject to be recorded.

In addition, the N-vinyl lactam may have a substituent group such as alkyl group, and an aryl group and may connect to a saturated or unsaturated cyclic structure.

The ink composition of the present invention may preferably contain an oligomer having a radical polymerizable group. The radical polymerizable group is preferably an ethylenically unsaturated group, more preferably a (meth)acryloxy group.

Examples of the oligomer having a radical polymerizable group include olefin oligomers having a radical polymerizable group (such as an ethylene oligomer, a propylene oligomer and a butene oligomer), vinyl oligomers (such as a styrene oligomer, a vinyl alcohol oligomer, a vinyl pyrrolidone oligomer, an acrylate oligomer, and a methacrylate oligomer), diene oligomers (such as butadiene oligomers, chloroprene rubbers, pentadiene oligomers), ring-opening polymer oligomers (such as di-, tri-, tetra-ethylene glycol, polyethylene glycol, polyethylimine), polyaddition systems (oligoester acrylate, polyamide oligomers, polyisocyanate oligomers), addition condensation oligomers (such as phenol resins, amino resins, xylene resins, ketone resins) and the like. Of these, an oligo ester (meth)acrylate is preferred, of these, urethane (meth)acrylate, polyester (meth)acrylate, epoxy (meth)acrylate are more preferred, and urethane (meth)acrylate is even more preferred.

A preferred urethane (meth)acrylate includes an aliphatic urethane (meth)acrylate, and an aromatic urethane (meth)acrylate and a more preferred urethane (meth)acrylate includes an aliphatic urethane (meth)acrylate.

In addition, a urethane (meth)acrylate is preferably a urethane (meth)acrylate having four or less functional groups and more preferably a urethane (meth)acrylate having two or less functional groups.

By containing a urethane (meth)acrylate, an ink composition that exhibits superior adhesion on a base material and curability can be obtained.

Regarding the oligomer, reference may be made to Oligomer Handbook (Yoshikawa Junji, published by The Chemical Daily Co., Ltd.).

In addition, examples of the commercially available product of oligomers are given below.

Examples of the urethane (meth)acrylate include R1204, R1211, R1213, R1217, R1218, R1301, R1302, R1303, R1304, R1306, R1308, R1901, R1150 and the like (manufactured by Dai-ichi Kogyo Seiyaku Co., Ltd.), EBECRYL series (for example, EBECRYL 230, 270, 4858, 8402, 8804, 8807, 8803, 9260, 1290, 1290 K, 5129, 4842, 8210, 210, 4827, 6700, 4450, 220 (manufactured by Daicel Cytec Co., Ltd.), NKoligo U-4 HA, U-6 HA, U-15 HA, U-108 A, U200AX (manufactured by Shin-Nakamura Chemical Co., Ltd.), and Aronix M-1100, M-1200, M-1210, M-1310, M-1600 and M-1960 (manufactured by Toagosei Co., Ltd.).

Examples of the polyester (meth)acrylate include EBECRYL series (for example, EBECRYL770, IRR467, 81, 84, 83, 80, 675, 800, 810, 812, 1657, 1810, IRR302, 450, 670, 830, 870, 1830, 1870, 2870, IRR267, 813, IRR483, 811 and the like) manufactured by Daicel Cytec Co., Ltd., Aronix M-6100, M-6200, M-6250, M-6500, M-7100, M-8030, M-8060, M-8100, M-8530, M-8560, M-9050 manufactured by Toagosei Co., Ltd.

In addition, examples of epoxy (meth)acrylate include EBECRYL series (for example, EBECRYL 600, 860, 2958, 3411, 3600, 3605, 3700, 3701, 3703, 3702, 3708, RDX63182, 6040 and the like) manufactured by Daicel Cytec Co., Ltd.

The oligomer having a radical polymerizable group may be used alone or in combination of two or more types.

In the ink composition of the present invention, the content of oligomer having a radical polymerizable group is preferably 0.1 to 50% by mass, more preferably 0.5 to 20% by mass, even more preferably 1 to 10% by mass with respect to the total mass of the ink composition.

### - Cationic polymerizable compound-

As the cationic polymerizable compound used for the present invention, any compound may be used without particular limitation regardless of species such as a monomer, an oligomer and a polymer so long as it is generated from a cation polymerization reaction by a cation polymerization initiation species and is cured, and in particular, various cationic polymerizable monomers well-known as photo-cationic polymerizable monomers that cause polymerization reaction due to initiation species generated from the following cation polymerization initiator may be used. In addition, the cationic polymerizable compound may be a mono-functional compound or a multifunctional compound.

A oxirane ring-containing compound (also referred to as "epoxy compound" or "oxirane compound") refers to a compound that contains at least one oxirane ring (oxiranyl group, epoxy group) in a molecule, specifically, is suitably selected from those commonly used as an epoxy resin, and examples thereof include conventional well-known aromatic epoxy resins, cycloaliphatic epoxy resins and aliphatic epoxy resins. The oxirane ring-containing compound may be one of monomers, oligomers and polymers. In addition, an oxetane ring-containing compound (hereinafter, also referred to as an "oxetane compound") refers to a compound that contains at least one oxetane ring (oxetanyl group) in the molecule.

The cationic polymerizable compound preferably has a molecular weight of 80 to 2,000, more preferably 80 to 1,000, even more preferably 80 to 800.

Examples of the cationic polymerizable compound include epoxy compounds, vinyl ether compounds, oxetane compounds described in JP 1994-9714A (JP H06-9714A), JP 2001-31892A (JP H13-31892A), JP 2001-40068A (JP H13-40068A), JP 2001-55507A (JP H13-55507A), JP 2001-310938A (JP H13-310938A), JP 2001-310937A (JP H13-310937A), JP 2001-220526A (JP H13-220526A) and the like.

In addition, the oxetane compound may be arbitrarily selected from well-known oxetane compounds described in JP 2001-220526A, JP 2001-310937A and JP 2003-341217A.

In the ink composition of the present invention, the polymerizable compound may be used alone or in combination of two or more types.

The content of the polymerizable compound in the ink composition of the present invention is preferably 30 to 98 parts by mass, more preferably 40 to 95 parts by mass, and even more preferably 50 to 90 parts by mass, with respect to the total mass of the ink composition. Within this range, curability is superior and viscosity is appropriate.

### <Polymerization initiator>

The ink composition of the present invention preferably contains a polymerization initiator.

The polymerization initiator that can be used for the present invention may be selected from well-known polymerization initiators.

The polymerization initiator that can be used for the present invention may be used alone or in combination of two or more types. In addition, the cation polymerization initiator may be used in conjunction with a radical polymerization initiator.

The polymerization initiator that can be used for the present invention is a compound that absorbs external energy and produces polymerization initiation species. The external energy used for initiation of energy polymerization is classified into heat and active radiation and thermal polymerization initiators and photo-polymerization initiators are used. Examples of active radiation include χ-rays, β-rays, an electron beam, ultraviolet rays, UV rays, and infrared rays.

### -Radical polymerization initiator-

The radical polymerization initiator that can be used for the present invention is not particularly limited and may be selected from well-known radical polymerization initiators.

Examples of the radical polymerization initiator that can be used for the present invention include (a) aromatic ketones, (b) acyl phosphine compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (1) compounds having a carbon halogen bond, and (m) alkylamine compounds and the like. The radical polymerization initiator may use from (a) to (m), or a combination thereof.

Of these, (a) aromatic ketones and (b) acyl phosphine compounds are preferred.

Examples of (a) aromatic ketones include α-hydroxyketone compounds and α-aminoketone compounds. Examples of the α-hydroxyketone compounds include 1-[4-(2-hydroxy ethoxy)phenyl]-2-hydroxy-2-methyl-1-propan-1-one, 2-hydroxy-2-methyl-1-phenyl-propan-1-one, 1-hydroxycyclohexyl phenyl ketone and the like.

Examples of the α-aminoketone compound include 2-methyl-1-phenyl-2-morpholino propan-1-one, 2-methyl-1-[4-(hexyl) phenyl]-2-morpholino propan-1-one, 2-ethyl-2-dimethylamino-1-(4-morpholinophenyl)-butan-1-one and the like.

The (b) acyl phosphine compound is preferably an acyl phosphine oxide compound.

Examples of preferred acyl phosphine oxide compounds include monoacyl phosphine oxide compounds and bisacyl phosphine oxide compounds and the like.

Well-known monoacyl phosphine oxide compounds may be used as the monoacyl phosphine oxide compounds. Examples of monoacyl phosphine oxide compounds include monoacyl phosphine oxide compounds described in JP 1985-8047B (JP S60-8047B) and JP 1988-40799 (JP S63-40799B).

Well-known bisacyl phosphine oxide compounds may be used as the bisacyl phosphine oxide compounds. Examples of bisacyl phosphine oxide compounds include bisacyl phosphine oxide compounds described in JP 1991-101686A (H3-101686A), JP 1993-345790A (JP H5-345790A) and JP 1994-298818A (JP H6-298818A).

The ink composition of the present invention preferably contains an acyl phosphine oxide compound, more preferably uses an acyl phosphine compound in conjunction with an α-hydroxyketone compound and/or an α-aminoketone compound, and even more preferably uses an acylphosphine compound in conjunction with an α-hydroxyketone compound and an α-aminoketone compound. With this configuration, an ink composition with superior curability and superior blocking resistance can be obtained.

### -Cation polymerization initiator-

Examples of the cation polymerization initiator (photo-acid-generating agent) that can be used for the present invention include compounds used for chemically-amplified photoresists or photo-cation polymerization (organic electronics materials Kenkyu Kai, "Organic Materials for Imaging", published by Bunshin Shuppan Sha (1993), pages 187 to 192).

Examples of cation polymerization initiators used for the present invention will be described below.

First, examples thereof include B(C₆F₅)₄⁻, PF₆⁻, AsF₆⁻, SbF₆⁻, and CF₃SO₃⁻ salts of aromatic onium compounds such as diazonium, ammonium, iodonium, sulfonium and phosphonium compounds. Second, example thereof includes sulfone generating sulfonic acid. Third, halogenide photo-generating hydrogen halogenide may be used. Fourth, examples thereof include iron-arene complexes.

The cation polymerization initiator that can be used for the present invention is preferably an onium salt compound, is more preferably an iodonium salt compound or a sulfonium salt compound, and is even more preferably a diaryliodonium salt compound or a triarylsulfonium salt compound. In addition, a benzene ring of the triarylsulfonium salt compound is preferably substituted by a halogen atom. The halogen atom is preferably a fluorine atom, a chlorine atom or a bromine atom, and is more preferably a fluorine atom or a chlorine atom.

In addition, the cation polymerization initiator is suitable for use in those described in the paragraphs 0051 to 0109, JP 2007-224149A.

The content of polymerization initiator in the ink composition of the present invention is preferably 0.1 to 20.0% by mass, more preferably 0.5 to 18.0% by mass, even more preferably 1.0 to 15. 0% by mass, with respect to the total mass of the ink composition. It is preferable that the amount of the polymerization initiator added be within this range from a viewpoint of superior curability and decrease in surface stickiness.

In addition, the content ratio (weight mass) of the polymerization initiator and the polymerizable compound in the ink composition of the present invention is preferably polymerization initiator:polymerizable compound = 0.5:100 to 30:100, more preferably 1:100 to 15:100, even more preferably 2:100 to 10:100.

### <Sensitizer>

The ink composition of the present invention preferably contains a sensitizer since it absorbs a specific active energy light and facilitates degradation of the radical polymerization initiator.

Examples of the sensitizer include polynuclear aromatics (for example, pyrene, perylene, triphenylene, 2-ethyl-9,10-dimethoxyanthracene), xanthenes (for example, flourescein, eosin, erythrosine, rhodamine B, rose bengal), cyanines (for example, thiacarbocyanine, oxacarbocyanine and the like), merocyanines (for example, merocyanine, carbomerocyanine and the like), thiazines (for example, thionine, methylene blue, toluidine blue and the like), acridines (for example, acridine orange, chloroflavin, acrylflavin and the like), anthraquinones (for example, anthraquinone), squaryliums (for example, squarylium and the like), coumarins (for example, 7-diethylamino-4-methylcoumarin and the like) and the like.

Preferred sensitizers of the present invention include compounds represented by the following formulae (vi) to (x) and (xiv).

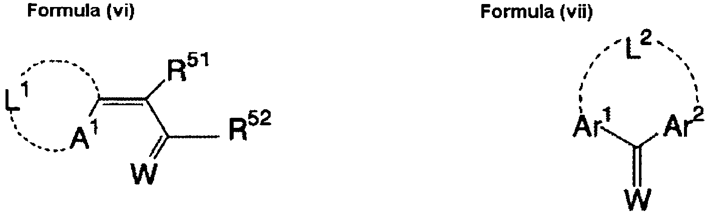

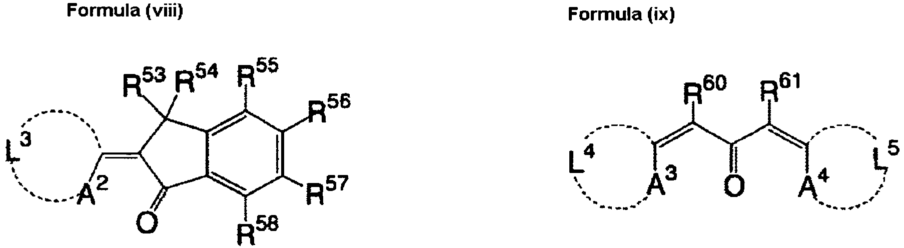

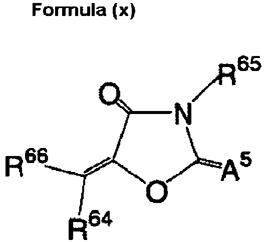

In formula (vi), A¹ represents a sulfur atom or NR⁵⁰ and R⁵⁰ represents an alkyl group or an aryl group. L¹ represents a non-metal atom group that forms a basic nucleus of a pigment with an adjacent A¹ and an adjacent carbon atom. R⁵¹ and R⁵² each independently represent a hydrogen atom or a monovalent non-metal atom group and R⁵¹ and R⁵² may be joined together to form an acidic nucleus of pigment. W represents an oxygen atom or a sulfur atom.

In formula (vii), Ar¹ and Ar² each independently represent an aryl group and are connected through a bond via L². L² represents -O- or -S-. W is the same as represented in Chem. (vi).

In formula (viii), A² represents a sulfur atom or NR⁵⁹, and R⁵⁹ represents an alkyl group or an aryl group. L³ represents a non-metal atom group that forms a basic nucleus of pigment with an adjacent A² and an adjacent carbon atom. R⁵³, R⁵⁴, R⁵⁵, R⁵⁶, R⁵⁷ and R⁵⁸ each independently represent a monovalent non-metal atom group.

In formula (ix), A³ and A⁴ each independently represent -S-, -NR⁶²-, or -NR⁶³-, and R⁶² and R⁶³ each independently represent a substituted or unsubstituted alkyl group, or a substituted or unsubstituted aryl group. L⁴ and L⁵ each independently represent a non-metal atom group that forms a basic nucleus of pigment with adjacent A³ and A⁴ and an adjacent carbon atom. R⁶⁰ and R⁶¹ each independently represent a hydrogen atom or a monovalent non-metal atom group. R⁶⁰ and R⁶¹ may be joined together to form an aliphatic or aromatic ring.

In formula (x), R⁶⁶ represents an aromatic ring or a hetero ring that may have a substituent. A⁵ represents an oxygen atom, a sulfur atom or -NR⁶⁷-. R⁶⁴, R⁶⁵ and R⁶⁷ each independently represent a hydrogen atom or a monovalent non-metal atom group. R⁶⁷ and R⁶⁴, and R⁶⁵ and R⁶⁷ may be respectively joined together to form an aliphatic or aromatic ring.

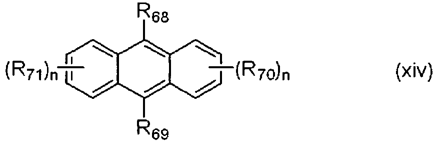

In formula (xiv), R⁶⁸ and R⁶⁹ each independently represent a hydrogen atom or a monovalent non-metal atom group. R⁷⁰ and R⁷¹ each independently represent a hydrogen atom or a monovalent non-metal atom group and n represents an integer of 0 to 4. When n is 2 or more, R⁷⁰ and R⁷¹ may be bonded to each other since they form an aliphatic or aromatic ring.

Of these, the sensitizer is preferably an anthracene derivative represented by Chem. (xiv). By using an anthracene derivative as the sensitizer, an ink composition with superior curability can be advantageously obtained.

The content of the sensitizer in the ink composition of the present invention is preferably 0.01 to 20% by mass, more preferably 0.1 to 15 % by mass, even more preferably 0.5 to 10% by mass with respect to the total mass of the ink composition, from a viewpoint of colorability of ink.

In addition, the sensitizer may be used alone or in combination of two or more types.

In addition, regarding the content ratio of the sensitizer and the polymerization initiator in the ink composition, the content of polymerization initiator/content of sensitizer on the basis of mass is preferably 100 to 0.5, more preferably 50 to 1, and even more preferably 10 to 1.5, from viewpoints of improvement in degradation rate of a polymerization initiator and transmission of irradiated light.

### <Other components>

The ink composition of the present invention may contain, in addition to the components, a surfactant, a co-sensitizer, an ultraviolet absorber, an anti-oxidant, a decolorization blocker, a conductive salt, a solvent, a polymer compound, a basic compound and the like. These materials are described in JP 2009-221416A and may be used in the present invention. In addition, it goes without saying that a sum of contents of respective components contained in the ink composition of the present invention is 100% by mass or less.

In addition, the ink composition of the present invention preferably contains a polymerization inhibitor from viewpoints of stability and inhibition of head hill.

The polymerization inhibitor is preferably added in an amount of 200 to 20,000 ppm with respect to the total mass of the ink composition of the present invention.

Examples of the polymerization inhibitor include nitroso polymerization inhibitors, hindered amine polymerization inhibitors, hydroquinone, benzoquinone, p-methoxyphenol, TEMPO, TEMPOL, cupferron A1 and the like.

In addition, the ink composition of the present invention may contain a well-known colorant other than benzimidazolone-based pigments and bisacetoacetarylide-based pigments but does not preferably contain a colorant other than benzimidazolone-based pigments and bisacetoacetarylide-based pigments.

### <Physical properties of ink>

The present invention preferably uses an ink composition having a viscosity of 40 mPa·s or less at 25°C, more preferably 5 to 40 mPa·s, even more preferably 7 to 30 mPa·s, in terms of ejection property. In addition, the viscosity at an ejection temperature (preferably 25 to 80°C, more preferably 25 to 50°C) is preferably 3 to 15 mPa·s, more preferably 3 to 13 mPa·s. It is preferable that the viscosity of the ink composition of the present invention be suitably adjusted within this range. By setting a viscosity at room temperature, permeation of the ink composition into the medium to be recorded is inhibited and uncured monomer can be decreased although a porous medium to be recorded (support) is used. Furthermore, absorption of ink during drop landing of the ink composition can be inhibited and, as a result, image qualities are advantageously improved.

The surface tension at 25°C of the ink composition of the present invention is preferably 20 to 35 mN/m, more preferably 23 to 33 mN/m. When recording on various media to be recorded such as polyolefin, PET, coat paper, and non-coat paper, the surface tension is preferably 20 mN/m or more from viewpoints of absorption and permeation, preferably 35 mN/m or less from a viewpoint of wettability.

### (Preparation method of inkjet ink composition)

The method for producing the inkjet ink composition of the present invention is not particularly limited and is preferably a preparation method that includes mixing a polymer dispersant (dispersant A) having a weight average molecular weight of 10,000 to 80,000, a polymerizable compound, and a benzimidazolone-based pigment or a bisacetoacetarylide-based pigment to prepare a preliminary dispersion liquid A having a pigment concentration of 20 to 40% by mass (hereinafter, referred to as a "pre-dispersion process"), by subjecting the preliminary dispersion liquid A to pigment dispersion treatment to prepare a pigment dispersion liquid A having a pigment volume average particle diameter of 300 nm or less (hereinafter, referred to as a "present dispersion process"), and mixing a polymer dispersant (dispersant B) having a weight average molecular weight of 100,000 to 200,000 with the pigment dispersion liquid A (hereinafter, referred to as a "mixing process"). With the preparation method, an inkjet ink composition with superior storage stability and re-dispersibility can be readily obtained, a stable ink composition can be prepared due to superior flowability and a handling property of a pigment dispersion liquid used for preparation of the ink composition, and furthermore, a preparation time of the ink composition, in particular, dispersion time of a pigment can be reduced.

### <Pre-dispersion process>

The preparation method of the inkjet ink composition of the present invention preferably includes mixing a polymer dispersant (dispersant A) having a weight average molecular weight of 10,000 to 80,000, a polymerizable compound, and, a benzimidazolone-based pigment or a bisacetoacetarylide-based pigment to prepare a preliminary dispersion liquid A having a pigment concentration of 20 to 40% by mass (pre-dispersion process).

The dispersant A, polymerizable compound, and benzimidazolone-based pigment or bisacetoacetarylide-based pigment used for the pre-dispersion process are preferably those described above.

The used amounts of dispersant A, polymerizable compound, and, benzimidazolone-based pigment or bisacetoacetarylide-based pigment are not particularly limited and a preliminary dispersion liquid A having a pigment concentration of 20 to 40% by mass is preferably prepared by controlling used amounts of respective components.

The stirring apparatus used for the pre-dispersion process is not particularly limited and use of a magnetic stirrer or mixer with a stirring blade from a viewpoint of omitting a washing process is easy and efficient. In order to realize mass-production within a shorter time, a mixer with a stirring blade is preferred.

As a container used for stirring, a batch- or continuous-type commercially available product may be obtained and a continuous-type commercially available product enables preparation of uniform preliminary dispersion liquid A within a shorter time.

In addition, among types of stirring blade, a propeller-type, an axial turbine-type, emission flow turbine-type, anchor-type and the like are preferred. In addition, mixers such as sawtooth blades, closed-type rotors and rotor/stator may be used.

Specifically, a rotor/stator-type mixer (batch-type container, manufactured by Silverson Machines Ltd., Britain) may be exemplified.

The dispersion conditions during the pre-dispersion process may be suitably adjusted according to raw materials used, stirring apparatus, and state of preliminary dispersion liquid A obtained and the like.

In addition, in the pre-dispersion process, the polymerization inhibitor is preferably mixed with the preliminary dispersion liquid A. The polymerization inhibitor used for the pre-dispersion processes is preferably those described above.

### <Present dispersion process>

The preparation method of the inkjet ink composition of the present invention preferably includes subjecting the preliminary dispersion liquid A to pigment dispersion treatment to prepare a pigment dispersion liquid A having a pigment volume average particle diameter of 300 nm or less (present dispersion process).

The pigment dispersion treatment in the present dispersion process may use a variety of well-known dispersion apparatuses and examples thereof include dispersion apparatuses such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, a wet jet mill, a bead mill and the like. Of these, a media dispersion apparatus using balls, beads or the like is more preferred, and a bead mill dispersion apparatus is even more preferred.

The dispersion conditions of the present dispersion process may be suitably adjusted according to raw materials used, a dispersion apparatus, state of pigment dispersion liquid A obtained, and the like.

In addition, the pigment concentration of the pigment dispersion liquid A is preferably 20 to 40% by mass, more preferably 25 to 35 % by mass.

### <Mixing process>

The preparation method of the inkjet ink composition of the present invention preferably includes mixing a polymer dispersant (dispersant B) having a weight average molecular weight of 100,000 to 200,000 with the pigment dispersion liquid A (mixing process).

The dispersant B used for the mixing process is preferably described above.

During the mixing process, the dispersant B may be mixed with the pigment dispersion liquid A or may be dissolved in a polymerizable compound and then mixed with the pigment dispersion liquid A.

In addition, in the mixing process, respective components of the ink composition other than the dispersant B may be mixed.

Furthermore, during the mixing process, a polymerizable compound, polymerization inhibitor or the like may be mixed with the pigment dispersion liquid A as a liquid composition (corresponding to the following re-dispersion process), and then a dispersant B, a polymerization initiator, a sensitizer and the like are preferably mixed in as a powdery composition.

During the mixing process, the mixing apparatus is not particularly limited and may be a well-known mixing apparatus. Examples thereof include dispersion apparatuses such as a ball mill, a sand mill, an attritor, a roll mill, a jet mill, a homogenizer, a paint shaker, a kneader, a stirrer, a Henschel mixer, a colloid mill, an ultrasonic homogenizer, a pearl mill, a wet jet mill, a bead mill and the like.

### <Re-dispersion process>

The preparation method of the inkjet ink composition of the present invention preferably includes diluting the pigment dispersion liquid A with a polymerizable compound (re-dispersion process).

Here, the re-dispersion process refers to a process for diluting a previously prepared pigment dispersion having a pigment concentration higher than a pigment concentration of a final product (referred to as a "mill base" or "conc ink"). Commonly, an ink composition is prepared by preparing a mill base, storing the same for several hours to several months, performing dilution, that is, re-dispersion, and stirring is preferably carried out by imparting a predetermined share (force) to the stored mill base during a further time period. By performing the re-dispersion process, pigment aggregates formed for the storage period can be completely released, the concentration of coarse particles in the ink composition can be reduced and an inkjet ejection property is thus superior. In addition, in spite of filtering the ink composition, the re-dispersion process can be readily performed.

The re-dispersion process is preferably carried out together with the mixing process or before the mixing process.

When the re-dispersion process and the mixing process are simultaneously performed, the dispersant B is dispersed in the polymerizable compound used for dilution and the solution of the pigment dispersion liquid A (mill base) is added to the polymerizable compound dissolved in the dispersant B. In addition, in a case in which the re-dispersion process is performed and the mixing process is then performed, the pigment dispersion liquid A (mill base) is added to the polymerizable compound and then re-dispersed by dilution, and a dispersant B is added to the dilution liquid. In addition, the dispersant B is more preferably added in the form of a powder.

In addition, during the re-dispersion process, respective components of the ink composition other than the polymerizable compound may be mixed.

### <Dilution process>

The preparation method of the inkjet ink composition of the present invention preferably further includes adding a polymer dispersant (dispersant A) having a weight average molecular weight of 10,000 to 80,000 to a polymerizable compound, followed by stirring (dilution process), before the pre-dispersion process.

The dispersant A is preferably those described above.

The polymerizable compound is preferably a radical polymerizable compound or a cationic polymerizable compound, or the aforementioned polymerizable compound. Since the polymerizable compound is a main component of the dispersion medium, it preferably has a low viscosity of 15 mPa·s or less, specifically at room temperature (25°C) from a viewpoint of obtaining a uniform dispersion.

In particular, examples of the polymerizable compound include mono-functional or di-functional acrylates such as 2-phenoxyethyl acrylate, 2-(2-ethoxyethoxy)ethyl acrylate, octyl acrylate, isodecyl acrylate, decyl acrylate, lauryl acrylate, tetrahydrofurfuryl acrylate, isobornyl acrylate, cyclic trimethylpropane formal acrylate, isopropyl acrylate, 1,6-hexanediol diacrylate, 3-methyl-1,5-pentanediol acrylate, dipropylene glycol diacrylate, propoxylated neopentyl glycol diacrylate.

In the dilution process, the polymerizable compound is preferably used in an amount of 1 to 20 mass equivalents, more preferably 1.5 to 10 mass equivalents, with respect to the total amount of the dispersant A.

Any stirring apparatus may be used without particular limitation so long as the dispersant A can be dissolved in the polymerizable compound and is preferably the same as described in the pre-dispersion process.

The preparation method of the inkjet ink composition of the present invention may further include a well-known process such as filtering the ink composition.

### (Inkjet recording method, inkjet recording apparatus and printed material)

The inkjet recording method of the present invention is a method for forming an image by ejecting the ink composition for inkjet recording of the present invention on a medium to be recorded (support, recording material and the like), and irradiating active energy rays to the inkjet ink composition ejected on the medium to be recorded to cure the inkjet ink composition.

More specifically, the inkjet recording method of the present invention preferably includes (a¹) ejecting the inkjet ink composition of the present invention on the medium to be recorded, and (b¹) irradiating active energy rays to the ejected inkjet ink composition to cure the inkjet ink composition.

The inkjet recording method of the present invention includes (a¹) and (b¹) processes, thereby forming an image with an inkjet ink composition cured on the medium to be recorded.

In addition, the printed material of the present invention is a printed material recorded according to the inkjet recording method of the present invention.

The (a¹) process in the inkjet recording method of the present invention may use an inkjet recording apparatus described below.

### <Inkjet recording apparatus>

The inkjet recording apparatus that can be used for the inkjet recording method of the present invention is not particularly limited and may be arbitrarily selected from well-known inkjet recording apparatuses capable of accomplishing the intended resolution. That is, any well-known inkjet recording apparatus including commercially available products is capable of performing ejection of the ink composition on the medium to be recorded in the (a1) process of the inkjet recording method according to the present invention.

Examples of the inkjet recording apparatus that can be used for the present invention include apparatuses including an ink supplier, a temperature sensor, and an active energy ray source.

The ink supplier for example includes a source tank containing the ink composition of the present invention, a supply pipe, an ink supply tank immediately before the inkjet head, a a filter, and a piezo-type inkjet head. The piezo-type inkjet head may operate such that preferably 1 to 100 pl, and more preferably 8 to 30 pl of multi-size dots are ejected at a resolution of preferably 320×320 to 4,000×4,000 dpi, more preferably 400×400 to 1, 600×1, 600 dpi, even more preferably 720×720 dpi. In addition, the term "dpi" in this specification refers to the number of dots per 2.54 cm.

As mentioned above, since the ink composition of the present invention is preferably ejected at a predetermined temperature, a stabilization apparatus of the ink composition temperature is preferably equipped with the inkjet recording apparatus. A site maintained at a predetermined temperature corresponds to all of pipe systems and members that extend from an ink tank (an intermediate tank, in a case in which an intermediate tank is present) to a nozzle injection surface. That is, heat insulation and temperature elevation may be performed from the ink supply tank to the inkjet head part.

A temperature control method is not particularly limited and, for example, a plurality of temperature sensors are preferably provided at respective pipes to control heating according to ink flow and environmental temperature. The temperature sensor may be provided near the ink supply tank and the nozzle of inkjet head. In addition, the heating head unit is preferably thermally isolated or thermally insulated such that an apparatus body is not affected by the temperature of exterior air. In order to reduce printer operating time required for heating, or reduce loss of thermal energy, heat-insulation with other sites components and reduction of heat capacity over the heating unit are preferred.

Ejection of the ink composition of the present invention using the inkjet recording apparatus is preferably carried out after lowering the viscosity of the ink composition to preferably 3 to 15 mPa·s, more preferably 3 to 13 mPa·s by heating the ink composition at preferably 25 to 80°C, more preferably 25 to 50°C. In particular, use of the ink composition of the present invention having an ink viscosity at 25°C of 50 mPa·s or less is preferred from a viewpoint of performing superior ejection. By using this method, superior ejection stability can be realized.

The radiation-curable inkjet ink composition such as the ink composition of the present invention has a higher viscosity than the viscosity of the aqueous ink composition commonly used for inkjet recording. For this reason, variation in viscosity caused by variation in temperature during ejection is great. The variation in viscosity of the ink composition greatly affects variation in drop size and variation in drop ejection rate, thus causing deterioration in image qualities. Accordingly, it is necessary to maintain the temperature of the ink composition during ejection as much as possible. Accordingly, the control range of the temperature of the ink composition is preferably ±5°C with respect to set temperature, more preferably ±2°C with respect to set temperature, even more preferably ±1°C with respect to set temperature.

Then, a process for curing ink composition by (b¹) irradiating active energy rays to the ejected ink composition will be described.

The ink composition ejected on a medium to be recorded is cured by irradiating active energy rays. The reason for this is that the radical polymerization initiator contained in the ink composition of the present invention is degraded by irradiation of active energy rays, thus causing generation of polymerization initiation species such as radicals or acids, and the polymerization reaction of the polymerizable compound is generated and facilitated by functions of the initiation species. At this time, when the polymerization initiator and the sensitizer are present in the ink composition, the sensitizer in the system absorbs active energy rays and thus reaches an excited state, and the sensitizer contacts the polymerization initiator, thereby facilitating degradation of the polymerization initiator and accomplishing a curing reaction with higher sensitivity.

The active energy rays used herein may be α-rays, γ-rays, an electron beam, X-rays, ultraviolet rays, visible rays, infrared rays or the like. For example, the peak wavelength of active energy rays is preferably 200 to 600 nm, more preferably 300 to 450 nm, even more preferably 320 to 420 nm, and ultraviolet rays having a peak wavelength of active energy rays of 340 to 400 nm is particularly preferable, in terms of absorbance property of sensitizer.

In addition, the polymerization initiator of the ink composition of the present invention has a sufficient sensitivity even to active energy rays with low power. Accordingly, an exposed area is preferably cured at a luminance of preferably 10 to 4,000 mW/cm², more preferably 20 to 2, 500 mW/cm².

As an active energy ray source, a mercury lamp, a gas/solid laser or the like is mainly used. A mercury lamp or metal halide lamp is widely used as a light source used for curing of an ultraviolet ray-curable inkjet ink composition. However, in terms of environmental protection, mercury-free is considerably preferred and substitution of GaN-based semiconductor UV-emitting devices is industrially and environmentally useful. Furthermore, an LED (UV-LED) and a LD (UV-LD) are expected to act as light sources for photocurable inkjetting due to small size, long lifespan, high efficiency, and low cost.

In addition, a light-emitting diode (LED) and a laser diode (LD) may be used as active energy ray sources. In particular, when an ultraviolet ray source is required, an ultraviolet LED and an ultraviolet LD may be used. For example, Nichia Corporation sells a purple LED having a main emission spectrum having a wavelength of 365 nm to 420 nm. When a shorter wavelength is required, the specification of US Patent No. 6,084,250 discloses an LED mainly emitting active energy rays of 300 nm to 370 nm. In addition, other ultraviolet LEDs may be available and can irradiate radiation of other ultraviolet radiation ranges. The active energy ray source that is particularly preferred in the present invention is an UV-LED, particularly preferably a UV-LED having a peak wavelength of 340 to 400 nm. In addition, a maximum luminance of LED on the medium to be recorded is preferably 10 to 2,000 mW/cm², more preferably, 20 to 1,000 mW/cm², particularly preferably, 50 to 800 mW/cm².

Such active energy rays are preferably irradiated to the ink composition of the present invention preferably for 0.01 to 120 seconds, more preferably for 0.1 to 90 seconds.

The irradiation conditions and basic irradiation method of active energy rays are disclosed in JP 1985-132767A (JP S60-132767A). Specifically, a light source is provided at both sides of a head unit including an ejection apparatus for an ink composition and a head unit and a light source are irradiated, in a so-called "shuttle manner". The irradiation of active energy rays is carried out at an interval of a predetermined time (preferably 0.01 to 0.5 seconds, more preferably 0.01 to 0.3 seconds, even more preferably 0.01 to 0.15 seconds) after landing of the ink composition. As such, a time required from landing of the ink composition to irradiation is controlled to be within an extremely short time, thereby preventing the ink composition landing on the medium to be recorded from being permeated before curing. In addition, since exposure is possible before the ink composition permeates to a core in which a light source does not reach the porous medium to be recorded, preferably, residual unreacted monomers are inhibited.

In addition, curing may be completed by respective light sources not involving operation. The pamphlet of WO 99/54415A discloses use of an optical-fiber or a method in which a collimated light source on a mirror plane formed at the side of head unit and UV light is irradiated to a recording part, as an irradiation method. This curing method may also be used as an inkjet recording method of the present invention.

By using the inkjet recording method as mentioned above, the dot diameter of the ejected ink composition can be maintained on various media to be recorded having different surface wettability and image qualities can be improved. In addition, in order to obtain color images, colors are preferably repeated in order of higher brightness. By repeating ink compositions in order of higher brightness, irradiated light readily reaches the ink composition arranged in the lowest layer, and superior curing sensitivity, decrease in residual monomers, and enhancement of adhesion can be expected. In addition, irradiation may be carried out by ejecting all colors, arranging and exposing the same, but exposure is preferably separately performed on respective colors in terms of facilitation of curing.

As such, by curing the ink composition of the present invention at a high sensitivity by irradiation of active energy rays, an image can be formed on the surface of the medium to be recorded.

The ink composition of the present invention may be used in the form of an ink set containing a plurality of inkjet ink compositions.

In the inkjet recording method of the present invention, the sequence of the ejected color ink compositions is not particularly limited, but color ink compositions are preferably applied to the medium to be recorded in order of higher brightness, when yellow (the ink composition of the present invention), cyan, magenta, and black are used, preferably, yellow (the ink composition of the present invention), cyan, magenta and black are sequentially applied to the medium to be recorded. In addition, when white is further added, white, yellow (the ink composition of the present invention), preferably, cyan, magenta and black are sequentially applied to the medium to be recorded. Furthermore, the present invention is not limited thereto and the ink set of the present invention including at least seven colors of yellow (the ink composition of the present invention), light cyan, light magenta, cyan, magenta, gray, black and white ink compositions may be preferably used. In this case, preferably, white, light cyan, light magenta, yellow (the ink composition of the present invention), cyan, magenta, and black are sequentially applied to the medium to be recorded.

The medium to be recorded of the present invention is not particularly limited, and a well-known medium to be recorded may be used as a support or recording material. Examples of media include paper, plastic (for example, polyethylene, polypropylene, polystyrene or the like)-laminated paper, metal (for example, aluminum, zinc, copper or the like) plates, plastic (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal and the like) films, papers or plastic films on which the aforementioned metal is laminated or deposited and the like. In addition, as the medium to be recorded of the present invention, a non-absorbent medium to be recorded is preferred.

### [Examples]

The present invention will be described with reference to the following examples and comparative examples in more detail. The present invention is not limited to these examples. In addition, the term "part" described below refers to a "part by mass" unless otherwise described.

### (Example 1)

### <Synthesis example of acridone monomer 1>

9.76 parts of 9(10H)-acridone and 5.61 parts of potassium t-butoxide were dissolved in 30 parts of dimethylsulfoxide, followed by heating at 45°C. 15.26 parts of chloromethyl styrene was added dropwise thereto, followed by further stirring with heating at 50°C for 5 hours. This reaction solution was poured to 200 parts of distilled water with stirring, the resulting precipitate was filtered and washed to obtain 11.9 parts of acridone monomer 1.

### <Synthetic example of polymers 9 to 16>

### -Polymer 9-

A monomer mixture liquid containing an amine monomer, an acridone monomer, an oligomer, and a methyl ethyl ketone, as disclosed in Table 1 was placed in a 3-neck flask with a nitrogen atmosphere, stirred with a stirrer (three-one motor, manufactured by Shinto Scientific Co., Ltd.) and heated to 65°C while nitrogen was supplied to the flask.

First step: 60 mg of 2,2-azobis(2,4-dimethylvaleronitrile (V-65, manufactured by Wako Pure Chemical Industries, Ltd.) was added to the mixture liquid, and stirred with heating at 65°C for one hour.

Second step: 60 mg of V-65 was added thereto and stirred with heating at 65°C for 90 minutes.

The resulting reaction solution was added to 1,000 mL of hexane while stirring and the resulting precipitate was heated and dried to obtain a polymer 9.

### -Polymers 10 to 16-

### With respect to the polymers 10 to 16, polymers having different molecular weights were prepared by suitably varying the amount of V-65 added and heating time in the same sequence as in the polymer 9. Generally, when the amount of V-65 increases, the weight average molecular weight of the obtained polymer decreases, and when the amount of V-65 decreases, the weight average molecular weight of the obtained polymer increases. In addition, when heating times increases, the weight average molecular weight of the obtained polymer increases, and when heating time decreases, the weight average molecular weight of the polymer decreases.

The weight average molecular weight of respective polymers (in terms of polystyrene) was measured by GPC. The results are shown in Table 1.

**[Table 1]**

| | | Polymer 9 | Polymer 10 | Polymer 11 | Polymer 12 | Polymer 13 | Polymer 14 | Polymer 15 | Polymer 16 |
|---|---|---|---|---|---|---|---|---|---|
| Monomer mixture liquid | Acridone monomer 1 | 2.0 g | 2.0 g | 2.0 g | 2.0 g | 2.0 g | 2.0 g | 2.0 g | 2.0 g |
| | Amine monomer 1 | 4.0 g | 4.0 g | 4.0 g | 4.0 g | 4.0 g | 4.0 g | 4.0 g | 4.0 g |
| | Oligomer 1 | 14.0 g | 14.0 g | 14.0 g | 14.0 g | 14.0 g | 14.0 g | 14.0 g | 14.0 g |
| | Methyl ethyl ketone 1 | 30 g | 30 g | 30 g | 30 g | 30 g | 30 g | 30 g | 30 g |
| Weight average molecular weight of prepared polymer Mw | | 50,000 | 75,000 | 100,000 | 125,000 | 150,000 | 175,000 | 200,000 | 225,000 |

| | | | | | | | | | |
|---|---|---|---|---|---|---|---|---|---|
| Acridone monomer 1: the afore-mentioned acridone monomer 1 Amine monomer 1: (tert-butylamino) ethyl methacrylate (manufactured by Tokyo Chemical Industry Co., Ltd.) Oligomer 1: Poly(methyl methacrylate) macromonomer having a methacryloyl group at the end thereof, trade name: AA-6 (manufactured by Toagosei Co., Ltd.) | | | | | | | | | |

### <Synthetic example of polymers 1 to 8>

### -Polymer 1-

A monomer mixture liquid containing an amine monomer, an oligomer, and methyl ethyl ketone as disclosed in Table 2 was placed in a 3-neck flask with a nitrogen atmosphere, stirred with a stirrer and heated to 65°C while nitrogen was flowed in the flask.

First step: 55 mg of V-65 was added to the mixture liquid, and stirred with heating at 65°C for one hour.

Second step: 55 mg of V-65 was added thereto and stirred with heating at 65°C for 1.5 hour.

The resulting reaction solution was added to 1,000 mL of hexane while stirring and the resulting precipitate was heated and dried to obtain a polymer 1.

### -Polymers 2 to 8-

With respect to the polymers 2 to 8, polymers having different molecular weights were prepared by suitably varying the amount of V-65 added and heating time in the same sequence as in the polymer 1.

The weight average molecular weight of respective polymers (in terms of polystyrene) was measured by GPC. The results are shown in Table 2.

**[Table 2]**

| | | Polymer 1 | Polymer 2 | Polymer 3 | Polymer 4 | Polymer 5 | Polymer 6 | Polymer 7 | Polymer 8 |
|---|---|---|---|---|---|---|---|---|---|
| Monomer mixture liquid | Amin monomer 2 | 4.0 g | 4.0 g | 4.0 g | 4.0 g | 4.0 g | 4.0 g | 4.0 g | 4.0 g |
| | Oligomer 1 | 16.0 g | 16.0 g | 16.0 g | 16.0 g | 16.0 g | 16.0 g | 16.0 g | 16.0 g |
| | Methyl ethyl ketone 1 | 30 g | 30 g | 30 g | 30 g | 30 g | 30 g | 30 g | 30 g |
| Weight average molecular weight of prepared polymer Mw | | 50,000 | 75,000 | 100,000 | 125,000 | 150,000 | 175,000 | 200,000 | 225,000 |

| | | | | | | | | | |
|---|---|---|---|---|---|---|---|---|---|
| Amine monomer 2: 3-dimethylamino propyl acrylamide (manufactured by Kohjin Co., Ltd.) Oligomer 1: Poly(methyl methacrylate) macromonomer having a ethacryloyl group at the end thereof, trade name: AA-6 (manufactured by Toagosei Co., Ltd.) | | | | | | | | | |

### <Preparation of pigment dispersion liquids 1 to 18>

100 g of respective preliminary dispersion liquids as disclosed in Table 3 were stirred in a mixer (manufactured by Silverson Machines Ltd., 10 to 20 minutes, 2,000 to 3,000 rotations/min) to obtain respective uniform pigment dispersion liquids. Then, dispersion was performed using a circulation bead mill apparatus (Laboratory Mini Mill, manufactured by EIGER Corp.). The dispersion was performed under dispersion conditions of 100 cc of zirconia beads with a diameter of 0.65 mm, a flow rate of 9 m/s and a dispersion time of 30 minutes.

**[Table 3]**

| | | Mill 1 | Mill 2 | Mill 3 | Mill 4 | Mill 5 | Mill 6 | Mill 7 | Mill 8 | Mill 9 |
|---|---|---|---|---|---|---|---|---|---|---|
| Composition of preliminary dispersion liquid | Yellow pigment 30 g | 4GC | 4GC | 4GC | 4GC | 4GC | 4GC | 4GC | 4GC | 4GC |
| | Dispersant 1 5 g | Polymer 13 | Polymer 13 | Polymer 13 | Polymer 13 | Polymer 13 | Polymer 13 | Polymer 13 | Polymer 13 | Polymer 13 |
| | Dispersant 2 5 g | Polymer 13 | Polymer 1 | Polymer 2 | Polymer 3 | Polymer 4 | Polymer 5 | Polymer 6 | Polymer 7 | Polymer 8 |
| | Dispersion medium monomer 5 9 g | PEA | PEA | PEA | PEA | PEA | PEA | PEA | PEA | PEA |
| | Inhibitor 1 g | UV12 | UV12 | UV12 | UV12 | UV12 | UV12 | UV12 | UV12 | UV12 |

| | | Mill 10 | Mill 11 | Mill 12 | Mill 13 | Mill 14 | Mill 15 | Mill 16 | Mill 17 | Mill 18 |
|---|---|---|---|---|---|---|---|---|---|---|
| Composition of preliminary dispersion liquid | Yellow pigment 30 g | 4GC | 4GC | 4GC | 4GC | 4GC | 4GC | 4GC | 4GC | 4GC |
| | Dispersant 1 5 g | Polymer 2 | polymer 2 | polymer 2 | polymer 2 | polymer 2 | polymer 2 | polymer 2 | polymer 2 | polymer 2 |
| | Dispersant 2 5 g | polymer 2 | polymer 9 | polymer 10 | polymer 11 | polymer 12 | polymer 13 | polymer 14 | polymer 15 | polymer 16 |
| | Dispersion medium monomer 5 9 g | PEA | PEA | PEA | PEA | PEA | PEA | PEA | PEA | PEA |
| | Inhibitor 1 g | UV12 | UV12 | UV12 | UV12 | UV12 | UV12 | UV12 | UV12 | UV12 |

| | | | | | | | | | | |
|---|---|---|---|---|---|---|---|---|---|---|
| Yellow pigment 4GC : Pigment Yellow 155 (INKJET YELLOW 4 GC, manufactured by Clariant Co., Ltd.) Dispersion medium monomer PEA : monofunctional acrylate monomer (SR339C, manufactured by Sartomer Company, Inc.) Inhibitor UV12 : FIRSTCURE ST-1(manufactured by Albemarle Co., Ltd.) | | | | | | | | | | |

### <Evaluation of re-dispersibility>

About 1 g of immediately prepared (within one minute after dispersion) respective pigment dispersion liquids were added dropwise to about 10 cc of phenoxyethyl acrylate (SR339C, manufactured by Sartomer Company, Inc.), followed by thoroughly stirring with a dropper, and the particle size distribution of an initial pigment was measured using a laser diffraction/scattering particle size distribution meter LA-920 (manufactured by HORIBA, Ltd.).

In addition, pigment dispersion liquids (mill) 1 to 18 were placed in 30 mL plastic bottles and stored at room temperature (15 to 30°C) for two weeks. The liquid mixture and powder mixture as disclosed in Table 4 were stirred in a mixer (manufactured by manufactured by Silverson Machines Ltd. (5 minutes, 2,000 to 3,000 rotation/min) to obtain a uniform mixture liquid. 7 g of the pigment dispersion liquids 1 to 18 stored for two weeks were added to this mixture liquid, filled into a 125 mL plastic bottle, and vigorously shaken with a shaker (SK550, manufactured by SKANDEX Co., Ltd.) to prepare respective yellow inks.

In addition, after the start of vigorous shaking, a particle size distribution was measured at an interval of 5 minutes, each of the volume average particle diameters DV90 (particle diameter at a volume cumulative distribution of 90% when a cumulative distribution of volume is obtained in order from smaller particle size with respect to a particle size range (channel) divided based on the measured particle size distribution) at an initial state and after vigorous shaking was compared, and the time at which the difference therebetween was within 0.01 µm was recorded. In addition, vigorous shaking was performed for one hour or less.

The evaluation results of re-dispersibility of mills 1 to 18 are shown in Table 5. Here, a level at which re-dispersion is completed within one hour is within a practically applicable range.

**[Table 4]**

| Pigment dispersion | Pigment dispersion Mill 1 to mill 18 | 7.0 g |
|---|---|---|
| Liquid mixture | PEA | 20.0 g |
| | NVC | 34.0 g |
| | EOEOEA | 10.0 g |
| | DGPDA | 10.0 g |
| | TMPTA | 5.0 g |
| | CN964 | 3.6 g |
| | ST-1 | 0.4 g |
| Powder mixture | Irg184 | 2.0 g |
| | Irg819 | 4.0 g |
| | Irg907 | 2.0 g |
| | ITX | 2.0 g |

| | | |
|---|---|---|
| PEA: Phenoxyethyl acrylate (SR339C, manufactured by Sartomer Company, Inc.) NVC: n-Vinyl caprolactam (manufactured by BASF Corp.) EOEOEA: 2-(2-Ethoxyethoxy)ethyl acrylate (SR256C, manufactured by Sartomer Company, Inc.) DGPDA: Dipropylene glycol diacrylate (SR508, Manufactured by Sartomer Company, Inc.) TMPTA: Trimethylolpropane triacrylate (SR351, Manufactured by Sartomer Company, Inc.) CN964: Oligomer (SN964, Manufactured by Sartomer Company, Inc.) ST-1: Polymerization inhibitor, FIRSTCURE ST-1(manufactured by Albemarle Co., Ltd.) Irg184: Initiator, IRGACURE184 (manufactured by BASF Corp.) Irg819: Initiator, IRGACURE819 (manufactured by BASF Corp.) Irg907: Initiator, IRGACURE907 (manufactured by BASF Corp.) ITX: Sensitizer, mixture of 2-isopropylthioxanthone and 4-isopropylthioxanthone (manufactured by Lambson Ltd., trade name: SPEEDCURE ITX) | | |

**[Table 5]**

| | | Ink 1 | Ink 2 | Ink 3 | Ink 4 | Ink 5 | Ink 6 | Ink 7 | Ink 8 | Ink 9 |
|---|---|---|---|---|---|---|---|---|---|---|
| First dispersant | Added | Polymer 13 | Polymer 13 | Polymer 13 | Polymer 13 | Polymer 13 | Polymer 13 | Polymer 13 | Polymer 13 | Polymer 13 |
| | Mw | 150,000 | 150,000 | 150,000 | 150,000 | 150,000 | 150,000 | 150,000 | 150,000 | 150,000 |
| | Pigment -like skeleton | Present | Present | Present | Present | Present | Present | Present | Present | Present |
| Second dispersant | Added | | Polymer 1 | Polymer 2 | Polymer 3 | Polymer 4 | Polymer 5 | Polymer 6 | Polymer 7 | Polymer 8 |
| | Mw | | 50,000 | 75,000 | 100,000 | 125,000 | 150,000 | 175,000 | 200,000 | 225,000 |
| | Pigment -like skeleton | | Absent | Absent | Absent | Absent | Absent | Absent | Absent | Absent |
| Re-dispersibility | | NG after even one hour | 40 min | 45 min | NG after even one hour | NG after even one hour | NG after even one hour | NG after even one hour | NG after even one hour | NG after even one hour |

| | | ink10 | Ink 11 | Ink 12 | Ink 13 | Ink 14 | Ink 15 | Ink 16 | Ink 17 | Ink 18 |
|---|---|---|---|---|---|---|---|---|---|---|
| First dispersant | Added | Polymer 2 | Polymer 2 | Polymer 2 | Polymer 2 | Polymer 2 | Polymer 2 | Polymer 2 | Polymer 2 | Polymer 2 |
| | Mw | 75,000 | 75,000 | 75,000 | 75,000 | 75,000 | 75,000 | 75,000 | 75,000 | 75,000 |
| | Pigment -like skeleton | Absent | Absent | Absent | Absent | Absent | Absent | Absent | Absent | Absent |
| Second dispersant | Added | | Polymer 9 | Polymer 10 | Polymer 11 | Polymer 12 | Polymer 13 | Polymer 14 | Polymer 15 | Polymer 16 |
| | Mw | | 50,000 | 75,000 | 100,000 | 125,000 | 150,000 | 175,000 | 200,000 | 225,000 |
| | Pigment -like skeleton | | Present | Present | Present | Present | Present | Present | Present | Present |
| Re-dispersibility | | 5 min | 15 min | 20 min | 25 min | 35 min | 45 min | 50 min | 60 min | NG after even one hour |

### <Storage stability>

The liquid mixture disclosed in Table 4 was stirred in a mixer (manufactured by Silverson Machines Ltd., 5 minutes, 2,000 to 3,000 rotations/minute) to obtain a uniform mixture liquid. 7 g of the pigment dispersion mill 1 to mill 18 one hour after dispersion were added to the mixture liquid, and stirred with the mixer (15 minutes, 2,000 to 3,000 rotations/min), to obtain a uniform pigment mixture liquid. Furthermore, the powder mixture disclosed in Table 4 was added to the pigment mixture liquid and stirred with the mixer (10 minutes, 2,000 to 3,000 rotations/minute), to obtain respective uniform yellow inks 1 to 18.

9.5 cc (cm³) or more of the yellow ink was added to a glass screw cap bottle (10 cc), a cover was firmly closed, the bottle was stored in a humidity-constant chamber at which the temperature was set at a constant value for 25 days, and storage stability was evaluated from variations in viscosity and average particle diameter. In addition, the temperature of the humidity-constant chamber was set to the condition of 50°C.

The storage stability of respective inks 1 to 18 is shown in Table 6. Here, when variation in viscosity and particle diameter DV90 are lower than 10%, the value is within a practically applicable range.

**[Table 6]**

| | | Ink 1 | Ink 2 | Ink 3 | Ink 4 | Ink 5 | Ink 6 | Ink 7 | Ink 8 | Ink 9 |
|---|---|---|---|---|---|---|---|---|---|---|
| First dispersant | Added | Polymer 13 | Polymer 13 | Polymer 13 | Polymer 13 | Polymer 13 | Polymer 13 | Polymer 13 | Polymer 13 | Polymer 13 |
| | Mw | 150,000 | 150,000 | 150,000 | 150,000 | 150,000 | 150,000 | 150,000 | 150,000 | 150,000 |
| | Pigment-like skeleton | Present | Present | Present | Present | Present | Present | Present | Present | Present |
| Second dispersant | Added | | Polymer 1 | Polymer 2 | Polymer 3 | Polymer 4 | Polymer 5 | Polymer 6 | Polymer 7 | Polymer 8 |
| | Mw | | 50,000 | 75,000 | 100,000 | 125,000 | 150,000 | 175,000 | 200,000 | 225,000 |
| | Pigment-like skeleton | | Absent | Absent | Absent | Absent | Absent | Absent | Absent | Absent |
| Variation in viscosity | | < 10% | < 10% | < 10% | < 10% | < 10% | < 10% | < 10% | < 10% | < 10% |
| Variation in particle diameter DV90 | | < 10% | < 10% | < 10% | < 10% | < 10% | < 10% | < 10% | < 10% | < 10% |

| | | Ink 10 | Ink 11 | Ink 12 | Ink 13 | Ink 14 | Ink 15 | Ink 16 | Ink 17 | Ink 18 |
|---|---|---|---|---|---|---|---|---|---|---|
| First dispersant | Added | Polymer 2 | Polymer 2 | Polymer 2 | Polymer 2 | Polymer 2 | Polymer 2 | Polymer 2 | Polymer 2 | Polymer 2 |
| | Mw | 75,000 | 75,000 | 75,000 | 75,000 | 75,000 | 75,000 | 75,000 | 75,000 | 75,000 |
| | Pigment-like skeleton | Absent | Absent | Absent | Absent | Absent | Absent | Absent | Absent | Absent |
| Second dispersant | Added | | Polymer 9 | Polymer 10 | Polymer 11 | Polymer 12 | Polymer 13 | Polymer 14 | Polymer 15 | Polymer 16 |
| | Mw | | 50,000 | 75,000 | 100,000 | 125,000 | 150,000 | 175,000 | 200,000 | 225,000 |
| | Pigment-like skeleton | | Present | Present | Present | Present | Present | Present | Present | Present |
| Variation in viscosity | | ≥ 10% | ≥ 10% | ≥ 10% | < 10% | < 10% | < 10% | < 10% | < 10% | < 10% |
| Variation in particle diameter DV90 | | ≥ 10% | < 10% | < 10% | < 10% | < 10% | < 10% | < 10% | < 10% | < 10% |

### (Example 2)

### <Preparations of pigment dispersion liquids 19 to 21>

96g to 100 g of respective preliminary dispersion liquids as disclosed in Table 7 were stirred in a mixer (manufactured by Silverson Machines Ltd., 10 to 20 minutes, 2,000 to 3,000 rotations/min) to obtain respective uniform pigment dispersion liquids. Then, dispersion was performed using a circulation bead mill apparatus (Laboratory Mini Mill, manufactured by EIGER Corp.). The dispersion was performed under dispersion conditions of 100 cc of zirconia beads with a diameter of 0.65 mm, a flow rate of 9 m/s and a dispersion time of 30 minutes to one hour.

**[Table 7]**

| | | Mill 19 | Mill 20 | Mill 21 |
|---|---|---|---|---|
| Composition of preliminary dispersion liquid | Yellow pigment 30 g | 4GC | H4G | H2G |
| | Dispersant 1 6g | Polymer 2 | Polymer 2 | Polymer 2 |
| | Dispersion medium monomer 59 g | PEA | PEA | PEA |
| | Inhibitor 1 g | UV12 | UV12 | UV12 |

| | | | | |
|---|---|---|---|---|
| Yellow pigment 4GC: Pigment Yellow 155 (INKJET YELLOW 4 GC, manufactured by Clariant Co., Ltd.) Yellow pigment H4G: Pigment Yellow 151 (INKJET YELLOW H4G, manufactured by Clariant Co., Ltd.) Yellow pigment H2G: Pigment Yellow 120 (INKJET YELLOW H2G, manufactured by Clariant Co., Ltd.) Dispersion medium monomer PEA: monofunctional acrylate monomer (SR339C, Manufactured by Sartomer Company, Inc.) Inhibitor UV12: FIRSTCURE ST-1(manufactured by Albemarle Co., Ltd.) | | | | |

### <Evaluation of re-dispersibility>

About 1 g of immediately prepared (within one minute after dispersion) respective pigment dispersion liquids were added dropwise to about 10 cc of phenoxyethyl acrylate (SR339C, manufactured by Sartomer Company, Inc.), followed by thoroughly stirring with a dropper, and the particle size distribution of an initial pigment was measured using a laser diffraction/scattering particle size distribution meter LA-920 (manufactured by HORIBA, Ltd.).

In addition, pigment dispersion liquids (mill) 19 to 21 were placed in 30 mL plastic bottles and stored at room temperature (15 to 30°C) for two weeks. The liquid mixture and powder mixture as disclosed in Table 8 or 9 were stirred in a mixer (manufactured by Silverson Machines Ltd. (5 minutes, 2,000 to 3,000 rotations/min) to obtain uniform mixture liquids. 7 g of the pigment dispersion liquids 19 to 21 stored for two weeks was added to this mixture liquid, filled into a 125 mL plastic bottle, and vigorously shaken with a shaker (SK550, manufactured by SKANDEX Co., Ltd.) to prepare respective yellow inks. In addition, inks prepared according to the composition disclosed in Table 8 were inks 19A to 21A and the inks prepared according to the composition disclosed in Table 9 were inks 19B to 21B.

In addition, after the start of vigorous shaking, a particle size distribution was measured at an interval of 5 minutes, each of the volume average particle diameters DV90 at an initial state and after vigorous shaking was compared, and the time at which the difference therebetween was within 0.01 µm was recorded. In addition, vigorous shaking was performed for one hour or less.

The evaluation results of re-dispersibility of inks 19A to 21A and inks 19 B to 21B are shown in Table 10. Here, a level at which re-dispersion is completed within one hour is within a practically applicable range.

**[Table 8]**

| Pigment dispersion | Pigment dispersion Mill 19 to mill 21 | 6.7 g |
|---|---|---|
| Liquid mixture | PEA | 20.3 g |
| | NVC | 34.0 g |
| | EOEOEA | 10.0 g |
| | DGPDA | 10.0 g |
| | TMPTA | 5.0 g |
| | CN964 | 3.6 g |
| | ST-1 | 0.4 g |
| Powder mixture | Irg184 | 2.0 g |
| | Irg819 | 4.0 g |
| | Irg907 | 2.0 g |
| | ITX | 2.0 g |

**[Table 9]**

| Pigment dispersion | Pigment dispersion Mill 19 to mill 21 | 6.7 g |
|---|---|---|
| Liquid mixture | PEA | 20.0 g |
| | NVC | 34.0 g |
| | EOEOEA | 10.0 g |
| | DGPDA | 10.0 g |
| | TMPTA | 5.0 g |
| | CN964 | 3.6 g |
| | ST-1 | 0.4 g |
| Powder mixture | Irg184 | 2.0 g |
| | Irg819 | 4.0 g |
| | Irg907 | 2.0 g |
| | ITX | 2.0 g |
| | Polymer14 | 0.3 g |

**[Table 10]**

| | | Ink 19A | Ink 20A | Ink 21A | Ink 19B | Ink 20B | Ink 21B |
|---|---|---|---|---|---|---|---|
| Pigment | | PY155 | PY151 | PY120 | PY155 | PY151 | PY120 |
| First dispersant (added during dispersion) | Added | Polymer 2 | Polymer 2 | Polymer 2 | Polymer 2 | Polymer 2 | Polymer 2 |
| | Mw | 75,000 | 75,000 | 75,000 | 75,000 | 75,000 | 75,000 |
| | Pigment-like skeleton | Absent | Absent | Absent | Absent | Absent | Absent |
| Second dispersant (added during preparation of ink) | Added | | | | Polymer 14 | Polymer 14 | Polymer 14 |
| | Mw | | | | 175,000 | 175,000 | 175,000 |
| | Pigment-like skeleton | | | | Present | Present | Present |
| Re-dispersibility | | 5 minutes | 5 minutes | 5 minutes | 5 minutes | 5 minutes | 5 minutes |

### <Storage stability>

The liquid mixture and the powder mixture as disclosed in Tables 8 and 9 were stirred in a mixer (manufactured by Silverson Machines Ltd., 10 minutes, 2,000 to 3,000 rotations/minute) to obtain a uniform mixture liquid. 7 g of the pigment dispersions 1 to 18 one hour after dispersion were added to the mixture liquid, and stirred with the mixer (15 minutes, 2,000 to 3,000 rotations/min), to obtain respective uniform yellow inks. In addition, inks prepared according to the composition disclosed in Table 8 were inks 19A to 21A and the inks prepared according to the composition disclosed in Table 9 were inks 19B to 21B.

9.5 cc (cm³) or more of the yellow ink was added to a glass screw cap bottle (10 cc), a cover was firmly closed, the bottle was stored in a humidity-constant chamber at which the temperature was set at a constant value for 25 days, and storage stability was evaluated from variations in viscosity and average particle diameter. In addition, the temperature of the humidity-constant chamber was set to the condition of 50°C.

The storage stability of respective ink 19A to 21A, and inks 19B to 21B is shown in Table 11. Here, when variation in viscosity and particle diameter DV90 are lower than 10%, the value is within a practically applicable range.

**[Table 11]**

| | | Ink 19A | Ink 20A | Ink 21A | Ink 19B | Ink 20B | Ink 21B |
|---|---|---|---|---|---|---|---|
| Pigment | | PY155 | PY151 | PY120 | PY155 | PY151 | PY120 |
| First dispersant (added during dispersion) | Added | Polymer 2 | Polymer 2 | Polymer 2 | Polymer 2 | Polymer 2 | Polymer 2 |
| | Mw | 75,000 | 75,000 | 75,000 | 75,000 | 75,000 | 75,000 |
| | Pigment-like skeleton | Absent | Absent | Absent | Absent | Absent | Absent |
| Second dispersant (added during preparation of ink) | Added | | | | polymer14 | polymer14 | polymer14 |
| | Mw | | | | 175,000 | 175,000 | 175,000 |
| | Pigment-like skeleton | | | | Present | Present | Present |
| Variation in viscosity | | ≥ 10% | ≥ 10% | ≥ 10% | < 10% | < 10% | < 10% |
| Variation in particle diameter DV90 | | ≥ 10% | ≥ 10% | ≥ 10% | < 10% | < 10% | < 10% |

### (Example 3)

### <Synthesis of phthalimide monomer 1>

9.56 parts of N-(2-hydroxyethyl) phthalimide, 5.16 parts of triethylamine, and 50 parts of ethyl acetate were dissolved and heated at 40°C. 7.76 parts of 2-methacryloyloxyethyl isocyanate (Karenz MOI manufactured by Showa Denko K.K.) was slowly added thereto dropwise. The mixture was further stirred with heating at 45°C for 7 hours. The obtained reaction solution was extracted with ethyl acetate, washed with water, washed with saturated brine, dried and concentrated to obtain 15.1 parts of a phthalimide monomer 1.

### <Synthetic example of Polymers 17 to 19>

### -Polymer 17-

A monomer mixture liquid containing an amine monomer, acridone monomer, phthalimide monomer, oligomer, and, methyl ethyl ketone disclosed in Table 12 was placed in a 3-neck flask with a nitrogen atmosphere, stirred with a stirrer (three-one motor, manufactured by Shinto Scientific Co., Ltd.) and heated to 65°C while nitrogen was flowed into the flask.

First step: 25 mg of 2,2-azobis(2,4-dimethylvaleronitrile (V-65, manufactured by Wako Pure Chemical Industries, Ltd.) was added to the mixture liquid, and stirred with heating at 65°C for 2 hours.

Second step: 25 mg of V-65 was added thereto and was further stirred with heating at 65°C for 3 hours.

The resulting reaction solution was added to 1,000 mL of hexane while stirring, and the resulting precipitate was heated and dried to obtain a polymer 17.

### -Polymer 18 and 19-

With respect to the polymers 18 and 19, polymers having a substantially identical molecular weight were prepared by changing raw materials to those disclosed in Table 12 and the amount of V-65 added and heating time in the same sequence as in the polymer 17.

The weight average molecular weight of respective polymers (in terms of polystyrene) was measured by GPC. The results are shown in Table 12.

**[Table 12]**

| | | Polymer 17 | Polymer 18 | Polymer 19 |
|---|---|---|---|---|
| Monomer mixture liquid | Acridone monomer 1 | 2.0 g | | |
| | Phthalimide monomer 1 | | 2.0 g | |
| | Amine monomer 2 | 4.0 g | 4.0 g | 5.0 g |
| | Oligomer 2 | 14.0 g | 14.0 g | 15.0 g |
| | Methyl ethyl ketone | 30 g | 30 g | 30 g |
| Weight average molecular weight (Mw) of prepared polymer | | 140,000 | 140,000 | 140,000 |

| | | | | |
|---|---|---|---|---|
| Acridone monomer 1: the afore-mentioned acridone monomer 1 Phthalimide monomer 1: the afore-mentioned phthalimide monomer 1 Amine monomer 2: 3-dimethylaminopropyl acrylamide (manufactured by Kohjin Co., Ltd.) Oligomer 2: Alkyl group-terminated polyalkylene glycol monomethacrylate, weight average molecular weight of 4,000 (trade name: Blemmer ALE -800, manufactured by Nippon Oil & Fats Co., Ltd.) | | | | |

### <Preparation of pigment dispersion liquids 22 to 27>

100 g of respective preliminary dispersion liquids as disclosed in Table 13 were stirred in a mixer (manufactured by Silverson Machines Ltd., 10 to 20 minutes, 2,000 to 3,000 rotations/min) to obtain respective uniform pigment dispersion liquids. Then, dispersion was performed using a circulation bead mill apparatus (Laboratory Mini Mill, manufactured by EIGER Corp.). The dispersion was performed under dispersion conditions of 100 cc of zirconia beads with a diameter of 0.65 mm, a flow rate of 9 m/s and a dispersion time of 30 minutes.

**[Table 13]**

| | | Mill 22 | Mill 23 | Mill 24 | Mill 25 | Mill 26 | Mill 27 |
|---|---|---|---|---|---|---|---|
| Composition of preliminary dispersion Liquid | Yellow pigment 30 g | 4GC | 4GC | 4GC | 4GC | 4GC | 4GC |
| | Dispersant 1 5 g | So132000 | So132000 | So132000 | TEGO685 | TEGO685 | TEGO685 |
| | Dispersant 2 5 g | Polymer 17 | Polymer 18 | Polymer 19 | Polymer 17 | Polymer 18 | Polymer 19 |
| | Dispersion medium monomer 59 g | PEA | PEA | PEA | PEA | PEA | PEA |
| | Inhibitor 1 g | UV12 | UV12 | UV12 | UV12 | UV12 | UV12 |

| | | | | | | | |
|---|---|---|---|---|---|---|---|
| Yellow pigment 4GC: Pigment Yellow 155 (INKJET YELLOW 4GC, manufactured by Clariant Co., Ltd.) [0316] Dispersant Sol 32000: polymer having no pigment-like skeleton, and having an amine moiety and an average molecular weight of about 50,000 (SOLSPERSE 32000, manufactured by Lubrizol Corp.) [0317] Dispersant TEGO685: polymer having no pigment-like skeleton, and having an amine moiety and an average molecular weight of about 70,000 (TEGO DISPERS 685, manufactured by Evonik GmbH) [0318] Dispersion medium monomer PEA: monofunctional acrylate monomer (SR339C, manufactured by Sartomer Company, Inc.) [0319] Inhibitor UV12: FIRSTCURE ST-1 (manufactured by Albemarle Co., Ltd.) | | | | | | | |

### <Evaluation of re-dispersibility>

About 1 g of immediately prepared (within one minute after completion of dispersion) respective pigment dispersion liquids were added dropwise to about 10 cc of phenoxyethyl acrylate (SR339C, manufactured by Sartomer Company, Inc.), followed by thoroughly stirring with a dropper, and the particle size distribution of an initial pigment was measured using a laser diffraction/scattering particle size distribution meter LA-920 (manufactured by HORIBA, Ltd.).

In addition, pigment dispersion liquids (mill) 22 to 27 were placed in 30 mL plastic bottles and stored at room temperature (15 to 30°C) for two weeks. The liquid mixture and powder mixture as disclosed in Table 14 were stirred in a mixer (manufactured by manufactured by Silverson Machines Ltd. (5 minutes, 2,000 to 3,000 rotations/min) to obtain a uniform mixture liquid. 7 g of the pigment dispersion liquids 22 to 27 stored for two weeks were added to this mixture liquid, filled into a 125 mL plastic bottle, and vigorously shaken with a shaker (SK550, manufactured by SKANDEX Co., Ltd.) to prepare respective yellow inks.

In addition, a particle size distribution was measured at an interval of 5 minutes after initiation of vigorous shaking, each of the volume average particle diameters DV90 at an initial state and after vigorous shaking was compared, and the time at which the difference therebetween was within 0.01 µm was recorded. In addition, vigorous shaking was performed for one hour or less.

The evaluation results of re-dispersibility of inks 22 to 27 are shown in Table 15. Here, a level at which re-dispersion is completed within one hour is within a practically applicable range.

**[Table 14]**

| Pigment dispersion | Pigment dispersion mill 22 to mill 27 | 7.0 g |
|---|---|---|
| Liquid mixture | PEA | 20.0 g |
| | NVC | 34.0 g |
| | EOEOEA | 10.0 g |
| | DGPDA | 10.0 g |
| | TMPTA | 5.0 g |
| | CN964 | 3.6 g |
| | ST-1 | 0.4 g |
| Powder mixture | Irg184 | 2.0 g |
| | Irg819 | 4.0 g |
| | Irg907 | 2.0 g |
| | ITX | 2.0 g |

**[Table 15]**

| | | Ink 22 | Ink 23 | Ink 24 | Ink 25 | Ink 26 | Ink 27 |
|---|---|---|---|---|---|---|---|
| First dispersant | Added | Sol 32000 | Sol 32000 | Sol 32000 | TEGO 685 | TEGO 685 | TEGO 685 |
| | Mw | 50,000 | 50,000 | 50,000 | 50,000 | 50,000 | 50,000 |
| | Pigment-like skeleton | Absent | Absent | Absent | Absent | Absent | Absent |
| Second dispersant | Added | Polymer 17 | Polymer 18 | Polymer 19 | Polymer 17 | Polymer 18 | Polymer 19 |
| | Mw | 140,000 | 140,000 | 140,000 | 140,000 | 140,000 | 140,000 |
| | pigment-like skeleton | Present | Present | Present | Present | Present | Present |
| Re-dispersibility | | 35 minutes | 35 minutes | 35 minutes | 35 minutes | 35 minutes | 35 minutes |

### <Storage stability>

The liquid mixture disclosed in Table 14 and the powder mixture were stirred in a mixer manufactured by Silverson Machines Ltd. (10 minutes, 2,000 to 3,000 rotations/minute) to obtain a uniform mixture liquid. 7 g of the pigment dispersion mills 22 to 27 one hour after dispersion were added to the mixture liquid, and stirred with the mixer (15 minutes, 2,000 to 3,000 rotations/min), to obtain respective uniform yellow inks.

9.5 cc (cm³) or more of the yellow ink was added to a glass screw cap bottle (10 cc), a cover was firmly closed, the bottle was stored in a humidity-constant chamber at which the temperature was set at a constant value for 25 days, and storage stability was evaluated from variations in viscosity and average particle diameter. In addition, the temperatures of the humidity-constant chamber were set to the condition of 50°C and 60°C.

The storage stability of respective inks 22 to 27 is shown in Table 16. Here, when variation in viscosity and particle diameter DV90 are lower than 10%, the value is within a practically applicable range.

**[Table 16]**

| | | Ink 22 | Ink 23 | Ink 24 | Ink 25 | Ink 26 | Ink 27 |
|---|---|---|---|---|---|---|---|
| First dispersant | Added | Sol32000 | Sol32000 | Sol32000 | TEGO685 | TEGO685 | TEGO685 |
| | Mw | 50,000 | 50,000 | 50,000 | 50,000 | 50,000 | 50,000 |
| | Pigment-like skeleton | Absent | Absent | Absent | Absent | Absent | Absent |
| Second dispersant | Added | Polymer 17 | Polymer 18 | Polymer 19 | Polymer 17 | Polymer 18 | Polymer 19 |
| | Mw | 140,000 | 140,000 | 140,000 | 140,000 | 140,000 | 140,000 |
| | Pigment-like skeleton | Present | Present | Absent | Present | Present | Absent |
| Test results of variation in viscosity at 60°C | | < 10% | < 10% | ≥ 10% | < 10% | < 10% | >10% |
| Test results of variation in particle diameter DV90 at 60°C | | < 10% | < 10% | ≥ 10% | < 10% | < 10% | ≥ 10% |
| Test results of variation in viscosity at 50°C | | < 10% | < 10% | < 10% | < 10% | < 10% | < 10% |
| Test results of variation in particle diameter DV90 at 50°C | | < 10% | < 10% | < 10% | < 10% | < 10% | < 10% |

### (Example 4)

A monomer mixture liquid containing an amine monomer, an acridone monomer, an oligomer, and methyl ethyl ketone, as disclosed in Table 17 was placed in a 3-neck flask with a nitrogen atmosphere, stirred with a stirrer (three-one motor, manufactured by Shinto Scientific Co., Ltd.) and heated to 65°C while nitrogen was supplied to the flask.

First step: 20 mg of 2,2-azobis(2,4-dimethylvaleronitrile (V-65, manufactured by Wako Pure Chemical Industries, Ltd.) was added to the mixture liquid, and stirred with heating at 65°C for 2 hours.

Second step: 20 mg of V-65 was added thereto and stirred with heating at 65°C for 4 hours.

The resulting reaction solution was added to 1,000 mL of hexane while stirring and the resulting precipitate was heated and dried to obtain a polymer 20.

The weight average molecular weight of respective polymers (in terms of polystyrene) was measured by GPC. The results are shown in Table 17.

**[Table 17]**

| | | Polymer 20 |
|---|---|---|
| Monomer mixture liquid | Acridone monomer 1 | 2.0 g |
| | Amine monomer 1 | 4.0 g |
| | Oligomer 1 | 14.0 g |
| | Methyl ethyl ketone | 300 g |
| Weight average molecular weight (Mw) of prepared polymer | | 170,000 |

| | | |
|---|---|---|
| Acridone monomer 1: the afore-mentioned acridone monomer 1 Amine monomer 1: (tert-butyl amino) ethyl methacrylate (manufactured by Tokyo Chemical Industry Co., Ltd.) Oligomer 1: Poly(methyl methacrylate) macromonomer having a methacryloyl group at the end thereof, trade name: AA-6 (manufactured by Toagosei Co., Ltd.) | | |

### <Preparation of pigment dispersion liquid mills 28 to 31>

96g to 100 g of respective preliminary dispersion liquids as disclosed in Table 18 were stirred in a mixer (manufactured by Silverson Machines Ltd., 10 to 20 minutes, 2,000 to 3,000 rotations/min) to obtain respective uniform pigment dispersion liquids. Then, dispersion was performed using a circulation bead mill apparatus (Laboratory Mini Mill, manufactured by EIGER Corp.). The dispersion was performed under dispersion conditions of 100 cc of zirconia beads with a diameter of 0.65 mm, a flow rate of 9 m/s and a dispersion time of 30 minutes to 2 hours.

**[Table 18]**

| | | Mill 28 | Mill 29 | Mill 30 | Mill 31 | Mill 32 |
|---|---|---|---|---|---|---|
| Composition of preliminary dispersion liquid | Yellow pigment 30 g | 4GC | | | | |
| | Magenta pigment 30 g | | RT355D | | | |
| | Cyan pigment 30 g | | | GLO | | |
| | Black pigment 30 g | | | | CB | |
| | White pigment 55 g | | | | | TiO |
| | Dispersant 1 6g | Sol32000 | | | | Sol35000 |
| | Dispersant 2 10g | | | Sol32000 | Sol32000 | |
| | Dispersant 3 15 g | | Sol32000 | | | |
| | Dispersion medium monomer PEA 38 g | | | | | PEA |
| | Dispersion medium monomer PEA 54 g | | PEA | | | |
| | Dispersion medium monomer PEA 59 g | PEA | | PEA | PEA | |
| | Inhibitor 1 g | UV 12 | UV 12 | UV 12 | UV 12 | UV 12 |

| | | | | | | |
|---|---|---|---|---|---|---|
| Yellow pigment 4GC: Pigment Yellow 155 (INKJET YELLOW 4GC, manufactured by Clariant Co., Ltd.) Magenta pigment RT355D: quinacridone mixed crystal pigment (CINQUASIA MAGENTA RT355D, manufactured by BASF Corp.) Cyan pigment GLO:PB 15:3 (IRGALITE BLUE GLO, manufactured by BASF Corp.) Black pigment CB: Carbon black (Special Black 250, manufactured by Dexa Corp.) White pigment TiO: Titanium dioxide (CR600-2, manufactured by Ishihara Industry Co., Ltd.) Dispersant Sol 32000: polymer having no pigment-like skeleton, and having an amine moiety and an average molecular weight of about 50,000 (SOLSPERSE 32000, manufactured by Lubrizol Corp.) Dispersant Sol 35000: commercially available dispersant (SOLSPERSE 35000, Manufactured by Lubrizol Corp.) Dispersion medium monomer PEA: multifunctional acrylate monomer (SR339C, Manufactured by Sartomer Company, Inc.) Inhibitor UV12: FIRSTCURE ST-1 (manufactured by Albemarle Co., Ltd.) | | | | | | |

### <Evaluation of re-dispersibility>

About 1 g of immediately prepared (within one minute after completion of dispersion) respective pigment dispersion liquids were added dropwise to about 10 cc of phenoxyethyl acrylate (SR339C, manufactured by Sartomer Company, Inc.), followed by thoroughly stirring with a dropper, and the particle size distribution of an initial pigment was measured using a laser diffraction/scattering particle size distribution meter LA-920 (manufactured by HORIBA, Ltd.).

In addition, pigment dispersion liquids (mill) 28 to 32 were placed in 30 mL plastic bottles and stored at room temperature (15 to 30°C) for two weeks. The liquid mixture and powder mixture as disclosed in Table 19 were stirred in a mixer (manufactured by manufactured by Silverson Machines Ltd. (5 minutes, 2,000 to 3,000 rotations/min) to obtain a uniform mixture liquid. 7 g of the pigment dispersion liquids 28 to 32 stored for two weeks were added to this mixture liquid, filled into a 125 mL plastic bottle, and vigorously shaken with a shaker (SK550, manufactured by SKANDEX Co., Ltd.) to prepare respective yellow inks.

In addition, a particle size distribution was measured at an interval of 5 minutes after initiation of vigorous shaking, each of the volume average particle diameters DV90 at an initial state and after vigorous shaking was compared, and the time at which the difference therebetween was within 0.01 µm was recorded. In addition, vigorous shaking was performed for one hour or less.

The evaluation results of re-dispersibility of inks 28 to 32 are shown in Table 20. Here, a level at which re-dispersion is completed within one hour is within a practically applicable range.

**[Table 19]**

| | | Ink 28 | Ink 29 | Ink 30 | Ink 31 | Ink 32 |
|---|---|---|---|---|---|---|
| Pigment dispersion | Pigment dispersion Mill 28 to Mill 31 | 6.7 g Mill 28 | 15 g Mill 29 | 10.0 g Mill 30 | 5.0 g Mil 131 | 15 g Mill 32 |
| Liquid mixture | PEA | 20.0 g | 12.0 g | 17.0 g | 22.0 g | 12.0 g |
| | NVC | 34.0 g | 34.0 g | 34.0 g | 34.0 g | 34.0 g |
| | EOEOEA | 10.0 g | 10.0 g | 10.0 g | 10.0 g | 10.0 g |
| | DGPDA | 10.0 g | 10.0 g | 10.0 g | 10.0 g | 10.0 g |
| | TMPTA | 5.0 g | 5.0 g | 5.0 g | 5.0 g | 5.0 g |
| | CN964 | 3.6 g | 3.6 g | 3.6 g | 3.6 g | 3.6 g |
| | ST-1 | 0.4 g | 0.4 g | 0.4 g | 0.4 g | 0.4 g |
| Powder mixture | Irg184 | 2.0 g | 2.0 g | 2.0 g | 2.0 g | 2.0 g |
| | Irg819 | 4.0 g | 4.0 g | 4.0 g | 4.0 g | 4.0 g |
| | Irg907 | 2.0 g | 2.0 g | 2.0 g | 2.0 g | 2.0 g |
| | ITX | 2.0 g | 2.0 g | 2.0 g | 2.0 g | 2.0 g |
| | Polymer 20 | 0.3 g | | | | |

**[Table 20]**

| | | Ink 28 | Ink 29 | Ink 30 | Ink 31 | Ink 32 |
|---|---|---|---|---|---|---|
| First dispersant (added during dispersion) | Added | Sol32000 | Sol32000 | Sol32000 | Sol32000 | Sol32000 |
| | Mw | 50,000 | 50,000 | 50,000 | 50,000 | |
| | pigment-like skeleton | Absent | Absent | Absent | Absent | Absent |
| Second dispersant (added during preparation of ink) | Added | Polymer 20 | | | | |
| | Mw | 170,000 | | | | |
| | pigment-like skeleton | Present | | | | |
| Re-dispersibility | | 5 minutes | 5 minutes | 5 minutes | 5 minutes | 5 minutes |

### <Storage stability>

The liquid mixture disclosed in Table 19 was stirred in a mixer manufactured by Silverson Machines Ltd. (5 minutes, 2,000 to 3,000 rotations/minute) to obtain a uniform mixture liquid. 6.7g to 15 g of the pigment dispersion liquids (mills) 28 to 32 within one hour after dispersion were added to the mixture liquid, and stirred with the mixer (15 minutes, 2,000 to 3,000 rotations/min), to obtain respective uniform pigment mixture liquid. Furthermore, the powder mixture disclosed in Table 19 was added to the mixture liquid and stirred with the mixer (10 minutes, 2,000 to 3,000 rotations/minute), to obtain respective uniform inks 28 to 32.

9.5 cc (cm³) or more of the ink was added to a glass screw cap bottle (10 cc), a cover was firmly closed, the bottle was stored in a humidity-constant chamber at which the temperature was set at a constant value for 25 days, and storage stability was evaluated from variations in viscosity and average particle diameter. In addition, the temperatures of the humidity-constant chamber were set to the condition of 50°C and 60°C.

The evaluation results of storage stability of respective inks 28 to 32 are shown in Table 21. Here, when variation in viscosity and particle diameter DV90 are lower than 10%, the value is within a practically applicable range.

**[Table 21]**

| | | Ink 28 | Ink 29 | Ink 30 | Ink 31 | Ink 32 |
|---|---|---|---|---|---|---|
| First dispersant (added during dispersion) | Added | Sol 32000 | Sol 32000 | Sol 32000 | Sol 32000 | Sol 32000 |
| | Mw | 50,000 | 50,000 | 50,000 | 50,000 | |
| | Pigment-like skeleton | Absent | Absent | Absent | Absent | Absent |
| Second dispersant (added during preparation of ink) | Added | Polymer 20 | | | | |
| | Mw | 170,000 | | | | |
| | Pigment-like skeleton | Present | | | | |
| Test results of variation in viscosity at 60°C | | < 10% | < 10% | < 10% | < 10% | <10% |
| Test results of variation in particle diameter DV90 at 60°C | | < 10% | < 10% | < 10% | < 10% | < 10% |
| Test results of variation in viscosity at 50°C | | < 10% | < 10% | < 10% | < 10% | < 10% |
| Test results of variation in particle diameter DV90 at 50°C | | < 10% | < 10% | < 10% | < 10% | < 10% |

### (Example 5)

### <Preparation of pigment dispersion liquids 33 to 36>

100 g of respective preliminary dispersion liquids as disclosed in Table 22 were stirred in a mixer (manufactured by Silverson Machines Ltd., 10 to 20 minutes, 2,000 to 3,000 rotations/min) to obtain respective uniform pigment dispersion liquids. Then, dispersion was performed using a circulation bead mill apparatus (Laboratory Mini Mill, manufactured by EIGER Corp.). The dispersion was performed under dispersion conditions of 100 cc of zirconia beads with a diameter of 0.65 mm, a flow rate of 9 m/s and a dispersion time of 30 minutes.

**[Table 22]**

| | | Mill 33 | Mill 34 | Mill 35 | Mill 36 |
|---|---|---|---|---|---|
| Composition of preliminary dispersion liquid | Yellow pigment 30 g | 4GC | 4GC | 4GC | 4GC |
| | Dispersant 1 6g | Polymer 1 | Polymer 2 | Polymer 9 | Polymer 10 |
| | | 50,000 | 75,000 | 50,000 | 75,000 |
| | | Absent | Absent | Present | Present |
| | Dispersion medium monomer 59 g | PEA | PEA | PEA | PEA |
| | Inhibitor 1 g | UV12 | UV12 | UV12 | UV12 |

| | | | | | |
|---|---|---|---|---|---|
| Yellow pigment 4GC: Pigment Yellow 155(INKJET YELLOW 4GC, manufactured by Clariant Co., Ltd.) Dispersion medium monomer PEA: multifunctional acrylate monomer (SR339C, Manufactured by Sartomer Company, Inc.) Inhibitor UV12: FIRSTCURE ST-1(manufactured by Albemarle Co., Ltd.) | | | | | |

### <Evaluation of re-dispersibility>

About 1 g of immediately prepared (within one minute after completion of dispersion) respective pigment dispersion liquids were added dropwise to about 10 cc of phenoxyethyl acrylate (SR339C, manufactured by Sartomer Company, Inc.), followed by thoroughly stirring with a dropper, and the particle size distribution of an initial pigment was measured using a laser diffraction/scattering particle size distribution meter LA-920 (manufactured by HORIBA, Ltd.).

In addition, pigment dispersion liquids (mill) 33 to 36 were placed in 30 mL plastic bottles and stored at room temperature (15 to 30°C) for two weeks. The liquid mixture disclosed in Table 23 were stirred in a mixer (manufactured by manufactured by Silverson Machines Ltd. (5 minutes, 2,000 to 3,000 rotations/min) to obtain a uniform mixture liquid. 6.7 g of the pigment dispersion liquids 33 to 36 stored for two weeks were added to this mixture liquid, filled into a 125 mL plastic bottle and vigorously shaken with a shaker (SK550, manufactured by SKANDEX Co., Ltd.).

In addition, a particle size distribution was measured at an interval of 5 minutes after initiation of vigorous shaking, each of the volume average particle diameters DV90 at an initial state and after vigorous shaking was compared, and the time at which the difference therebetween was within 0.01 µm was recorded. In addition, vigorous shaking was performed for one hour or less.

The evaluation results of re-dispersibility of respective inks 33 to 36 are shown in Table 24. Here, a level at which re-dispersion is completed within one hour is within a practically applicable range.

**[Table 23]**

| Pigment dispersion | Pigment dispersion Mills 28 to 31 | 6.7 g |
|---|---|---|
| Liquid mixture | PEA | 20.0 g |
| | NVC | 34.0 g |
| | EOEOEA | 10.0 g |
| | DGPDA | 10.0 g |
| | TMPTA | 5.0 g |
| | CN964 | 3.6 g |
| | ST-1 | 0.4 g |
| Powder mixture | Irg184 | 2.0 g |
| | Irg819 | 4.0 g |
| | Irg907 | 2.0 g |
| | ITX | 2.0 g |
| | Polymer 20 | 0.3 g |

**[Table 24]**

| | | Ink 33 | Ink 34 | Ink 35 | Ink 36 |
|---|---|---|---|---|---|
| first dispersant (added during dispersion) | Added | Polymer 1 | Polymer 2 | Polymer 9 | Polymer 10 |
| | Mw | 50,000 | 75,000 | 50,000 | 75,000 |
| | pigment-like skeleton | Absent | Absent | Present | Present |
| second dispersant (added during preparation of ink) | Added | Polymer 20 | Polymer 20 | Polymer 20 | Polymer 20 |
| | Mw | 170,000 | 170,000 | 170,000 | 170,000 |
| | Pigment-like skeleton | Present | Present | Present | Present |
| Re-dispersibility | | 5 minutes | 5 minutes | 10 minutes | 15 minutes |

### <Storage stability>

The liquid mixture disclosed in Table 23 was stirred in a mixer (manufactured by Silverson Machines Ltd., 5 minutes, 2,000 to 3,000 rotations/minute) to obtain a uniform mixture liquid. 6.7 g of the pigment dispersion liquids (mills) 33 to 36 one hour after dispersion were added to the mixture liquid, and stirred with the mixer (15 minutes, 2,000 to 3,000 rotations/min), to obtain respective uniform mixture liquids. Furthermore, the powder mixture disclosed in Table 22 was added to the mixture liquids and stirred with the mixer (10 minutes, 2,000 to 3,000 rotations/minute), to obtain respective uniform yellow inks.

9.5 cc (cm³) or more of the yellow ink was added to a glass screw cap bottle (10 cc), a cover was firmly closed, the bottle was stored in a humidity-constant chamber at which the temperature was set at a constant value for 25 days, and storage stability was evaluated from variations in viscosity and average particle diameter. In addition, the temperatures of the humidity-constant chamber were set to the condition of 50°C and 60°C.

The evaluation results of storage stability of respective inks 33 to 36 is shown in Table 25. Here, when variation in viscosity and particle diameter DV90 are lower than 10%, the value is within a practically applicable range.

**[Table 25]**

| | | Ink 33 | Ink 34 | Ink 35 | Ink 36 |
|---|---|---|---|---|---|
| First dispersant (added during dispersion) | Added | Polymer 1 | Polymer 2 | Polymer 9 | Polymer 10 |
| | Mw | 50,000 | 75,000 | 50,000 | 75,000 |
| | Pigment-like skeleton | Absent | Absent | Present | Present |
| Second dispersant (added during preparation of ink) | Added | Polymer 20 | Polymer 20 | Polymer 20 | Polymer 20 |
| | Mw | 170,000 | 170,000 | 170,000 | 170,000 |
| | Pigment-like skeleton | Present | Present | Present | Present |
| Test results of variation in viscosity at 60°C | | < 10% | < 10% | < 10% | < 10% |
| Test results of variation in particle diameter DV90 at 60°C | | < 10% | < 10% | < 10% | < 10% |
| Test results of variation in viscosity at 50°C | | < 10% | < 10% | < 10% | < 10% |
| Test results of variation in particle diameter DV90 at 50°C | | < 10% | < 10% | < 10% | < 10% |

### (Example 6)

A handling property was compared between the pigment dispersion liquid 16 prepared in Example 1 and the pigment dispersion liquid 19 prepared in Example 2. After the two liquids were prepared, 30 g of the liquids were added to a 30 mL plastic bottle at room temperature (15 to 30°C) for 2 weeks.

After 2 weeks, the plastic bottle was slowly decanted at an angle of 135 degrees without stirring, and a time at which the pigment dispersion was transferred to another plastic bottle was measured. Specifically, this plastic bottle was weighed on an electric balance and a time at which 25 g was obtained was measured. The results are given below.
Pigment dispersion liquid 16: 0 g after even after 3 minutes
Pigment dispersion liquid 19: 25 g within 15 seconds

In addition, regarding the pigment dispersion liquids (mills) 19 to 21, 28, 33, and 34 prepared in this example, the volume average particle diameter DV90 of the pigment measured by the evaluation method of re-dispersibility was 200 to 220 nm.

## Claims

1. A non-aqueous, radically curable inkjet ink composition comprising:
an organic pigment; and
a basic polymer dispersant,
wherein the organic pigment comprises a benzimidazolone-based pigment or a bisacetoacetarylide-based pigment, and
the basic polymer dispersant includes a polymer dispersant having a weight average molecular weight of 10,000 to 80,000 (dispersant A), and a polymer dispersant having a weight average molecular weight of 100,000 to 200,000 (dispersant B).

2. The inkjet ink composition according to claim 1, wherein the dispersant A and the dispersant B are polymer dispersants having an amino group on a main chain or a side chain, respectively.

3. The inkjet ink composition according to claim 1 or 2, wherein the dispersant B is a polymer dispersant having a constituent unit represented by the following formula (1): 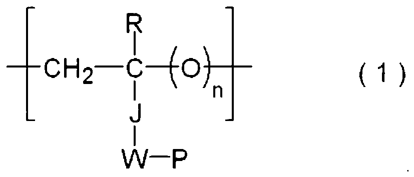 in formula (1), R represents a hydrogen atom or a methyl group, J represents -CO-, -COO-, -OCO-, a methylene group or a phenylene group, n represents 0 or 1, W represents a single bond or a bivalent linking group, and P represents a pigment-like residue obtained by removing one hydrogen atom from the structure selected from the group consisting of quinacridone, benzimidazolone, indole, quinoline, carbazole, acridine, acridone, anthraquinone, phthalimide, and naphthalimide.

4. The inkjet ink composition according to claim 3, wherein P is a pigment-like residue obtained by removing one hydrogen atom from the structure selected from the group consisting of acridone and phthalimide.

5. The inkjet ink composition according to any one of claims 1 to 4, wherein the dispersant A is a polymer dispersant that does not have a structure selected from the group consisting of quinacridone, benzimidazolone, indole, quinoline, carbazole, acridine, acridone, anthraquinone, phthalimide, and naphthalimide.

6. The inkjet ink composition according to any one of claims 1 to 5, further comprising:
at least one selected from the group consisting of N-vinyl caprolactam, 2-phenoxyethyl acrylate, and 2-(2-ethoxyethoxy)ethyl acrylate,
wherein the total content of N-vinyl caprolactam, 2-phenoxyethyl acrylate, and 2-(2-ethoxyethoxy)ethyl acrylate is 20% by mass or more, with respect to the total mass of the inkjet ink composition.

7. The inkjet ink composition according to any one of claims 1 to 6, wherein the organic pigment is a bisacetoacetarylide-based pigment.

8. The inkjet ink composition according to claim 7, wherein the bisacetoacetarylide-based pigment is a pigment yellow 155.

9. The inkjet ink composition according to any one of claims 1 to 8, further comprising a polymerization initiator.

10. A method for producing a non-aqueous, radiation-curable inkjet ink composition comprising:
mixing a polymer dispersant (dispersant A) having a weight average molecular weight of 10,000 to 80,000, a polymerizable compound, and a benzimidazolone-based pigment or bisacetoacetarylide-based pigment to prepare a preliminary dispersion liquid A having a pigment concentration of 20 to 40% by mass;
subjecting the preliminary dispersion liquid A to pigment dispersion treatment to prepare a pigment dispersion liquid A having a volume average particle diameter of the pigment of 300 nm or less; and
mixing a polymer dispersant (dispersant B) having a weight average molecular weight of 100,000 to 200,000 with the pigment dispersion liquid A.

11. The method for producing an inkjet ink composition according to claim 10, wherein the dispersant A and the dispersant B are polymer dispersants having an amino group on a main chain or a side chain, respectively.

12. The method for producing an inkjet ink composition according to claim 10 or 11, wherein the dispersant B is a polymer dispersant having a constituent unit represented by the following formula (1): 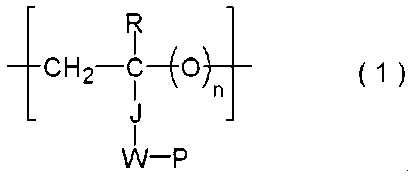 in formula (1), R represents a hydrogen atom or a methyl group, J represents -CO-, -COO-, -OCO-, a methylene group or a phenylene group, n represents 0 or 1, W represents a single bond or a bivalent linking group, and P represents a pigment-like residue obtained by removing one hydrogen atom from the structure selected from the group consisting of quinacridone, benzimidazolone, indole, quinoline, carbazole, acridine, acridone, anthraquinone, phthalimide, and naphthalimide.

13. The method for producing an inkjet ink composition according to claim 12, wherein P is a pigment-like residue obtained by removing one hydrogen atom from the structure selected from the group consisting of acridone and phthalimide.

14. The method for producing an inkjet ink composition according to any one of claims 10 to 13, wherein the dispersant A is a polymer dispersant that does not have a structure selected from the group consisting of quinacridone, benzimidazolone, indole, quinoline, carbazole, acridine, acridone, anthraquinone, phthalimide, and naphthalimide.

15. An inkjet recording method comprising:
(a¹) ejecting the inkjet ink composition according to any one of claims 1 to 9 or the inkjet ink composition prepared by the method according to any one of claims 10 to 14 on a medium to be recorded; and
(b¹) irradiating the ejected inkjet ink composition with an active radiation to cure the inkjet ink composition.

## Patentansprüche

1. Nichtwässrige, radikalisch härtbare Tintenstrahltintenzusammensetzung, umfassend:
ein organisches Pigment und
ein basisches Polymerdispergiermittel,
wobei das organische Pigment ein auf Benzimidazolon basierendes Pigment oder ein auf Bisacetoacetarylid basierendes Pigment umfasst und das basische Polymerdispergiermittel ein Polymer-dispergiermittel mit einem gewichtsmittleren Molekulargewicht von 10.000 bis 80.000 (Dispergiermittel A) und ein Polymerdispergiermittel mit einem gewichtsmittleren Molekulargewicht von 100.000 bis 200.000 (Dispergiermittel B) umfasst.

2. Tintenstrahltintenzusammensetzung nach Anspruch 1, wobei es sich bei dem Dispergiermittel A und dem Dispergiermittel B um Polymerdispergiermittel mit einer Aminogruppe an einer Hauptkette bzw. einer Seitenkette handelt.

3. Tintenstrahltintenzusammensetzung nach Anspruch 1 oder 2, wobei es sich bei dem Dispergiermittel B um ein Polymerdispergiermittel mit einer Aufbaueinheit der folgenden Formel (1) handelt: 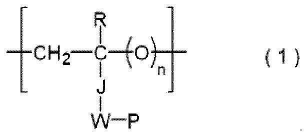 wobei in Formel (1) R für ein Wasserstoffatom oder eine Methylgruppe steht, J für -CO-, -COO-, -OCO-, eine Methylengruppe oder eine Phenylengruppe steht, n für 0 oder 1 steht, W für eine Einfachbindung oder eine zweiwertige Brückengruppe steht und P für einen durch Entfernung eines Wasserstoffatoms aus der Struktur aus der Gruppe bestehend aus Chinacridon, Benzimidazolon, Indol, Chinolin, Carbazol, Acridin, Acridon, Anthra-chinon, Phthalimid und Naphthalimid erhaltenen pigmentartigen Rest steht.

4. Tintenstrahltintenzusammensetzung nach Anspruch 3, wobei P für einen durch Entfernung eines Wasserstoffatoms aus der Struktur aus der Gruppe bestehend aus Acridon und Phthalimid erhaltenen pigmentartigen Rest steht.

5. Tintenstrahltintenzusammensetzung nach einem der Ansprüche 1 bis 4, wobei es sich bei dem Dispergiermittel A um ein Polymerdispergiermittel handelt, das keine Struktur aus der Gruppe bestehend aus Chinacridon, Benzimidazolon, Indol, Chinolin, Carbazol, Acridin, Acridon, Anthra-chinon, Phthalimid und Naphthalimid aufweist.

6. Tintenstrahltintenzusammensetzung nach einem der Ansprüche 1 bis 5, ferner umfassend:
mindestens ein Element aus der Gruppe bestehend aus N-Vinylcaprolactam, 2-Phenoxyethylacrylat und 2-(2-Ethoxyethoxy)ethylacrylat,
wobei die Gesamtmenge von N-Vinylcaprolactam, 2-Phenoxyethylacrylat und 2-(2-Ethoxyethoxy)ethyl-acrylat 20 Massen-% oder mehr, bezogen auf die Gesamtmasse der Tintenstrahltintenzusammensetzung, beträgt.

7. Tintenstrahltintenzusammensetzung nach einem der Ansprüche 1 bis 6, wobei sich bei dem organischen Pigment um ein auf Bisacetoacetarylid basierendes Pigment handelt.

8. Tintenstrahltintenzusammensetzung nach Anspruch 7, wobei es sich bei dem auf Bisacetoacetarylid basierenden Pigment um ein Pigment Yellow 155 handelt.

9. Tintenstrahltintenzusammensetzung nach einem der Ansprüche 1 bis 8, die ferner einen Polymerisationsinitiator umfasst.

10. Verfahren zur Herstellung einer nichtwässrigen, strahlungshärtbaren Tintenstrahltintenzusammensetzung, bei dem man
ein Polymerdispergiermittel (Dispergiermittel A) mit einem gewichtsmittleren Molekulargewicht von 10.000 bis 80.000, eine polymerisierbare Verbindung und ein auf Benzimidazolon basierendes Pigment oder ein auf Bisacetoacetarylid basierendes Pigment zu einer vorläufigen Dispersionsflüssigkeit A mit einer Pigmentkonzentration von 20 bis 40 Massen-% mischt;
die vorläufige Dispersionsflüssigkeit A einer Pigmentdispersionsbehandlung zur Herstellung einer Pigmentdispersionsflüssigkeit A mit einem volumenmittleren Pigmentteilchendurchmesser von 300 nm oder weniger unterwirft; und
ein Polymerdispergiermittel (Dispergiermittel B) mit einem gewichtsmittleren Molekulargewicht von 100.000 bis 200.000 mit der Pigmentdispersionsflüssigkeit A mischt.

11. Verfahren zur Herstellung einer Tintenstrahltintenzusammensetzung nach Anspruch 10, bei dem es sich bei dem Dispergiermittel A und dem Dispergiermittel B um Polymerdispergiermittel mit einer Aminogruppe an einer Hauptkette bzw. einer Seitenkette handelt.

12. Verfahren zur Herstellung einer Tintenstrahltintenzusammensetzung nach Anspruch 10 oder 11, bei dem es sich bei dem Dispergiermittel B um ein Polymerdispergiermittel mit einer Aufbaueinheit der folgenden Formel (1) handelt: 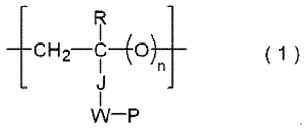 wobei in Formel (1) R für ein Wasserstoffatom oder eine Methylgruppe steht, J für -CO-, -COO-, -OCO-, eine Methylengruppe oder eine Phenylengruppe steht, n für 0 oder 1 steht, W für eine Einfachbindung oder eine zweiwertige Brückengruppe steht und P für einen durch Entfernung eines Wasserstoffatoms aus der Struktur aus der Gruppe bestehend aus Chinacridon, Benzimidazolon, Indol, Chinolin, Carbazol, Acridin, Acridon, Anthra-chinon, Phthalimid und Naphthalimid erhaltenen pigmentartigen Rest steht.

13. Verfahren zur Herstellung einer Tintenstrahltintenzusammensetzung nach Anspruch 12, bei dem P für einen durch Entfernung eines Wasserstoffatoms aus der Struktur aus der Gruppe bestehend aus Acridon und Phthalimid erhaltenen pigmentartigen Rest steht.

14. Verfahren zur Herstellung einer Tintenstrahltintenzusammensetzung nach einem der Ansprüche 10 bis 13, bei dem es sich bei dem Dispergiermittel A um ein Polymerdispergiermittel handelt, das keine Struktur aus der Gruppe bestehend aus Chinacridon, Benzimidazolon, Indol, Chinolin, Carbazol, Acridin, Acridon, Anthrachinon, Phthalimid und Naphthalimid aufweist.

15. Tintenstrahlaufzeichnungsverfahren, das Folgendes umfasst:
(a¹) Ausstoßen der Tintenstrahltintenzusammensetzung nach einem der Ansprüche 1 bis 9 oder der durch das Verfahren nach einem der Ansprüche 10 bis 14 hergestellten Tintenstrahltintenzusammensetzung auf ein Aufzeichnungsmedium und
(b¹) Bestrahlen der ausgestoßenen Tintenstrahltintenzusammensetzung mit einer aktiven Strahlung zum Härten der Tintenstrahltintenzusammensetzung.

## Revendications

1. Composition d'encre pour jet d'encre non aqueuse, durcissable par voie radicalaire comprenant :
un pigment organique ; et
un dispersant polymère basique,
le pigment organique comprenant un pigment à base de benzimidazolone ou un pigment à base de bisacétoacétarylide, et
le dispersant polymère basique comportant un dispersant polymère ayant un poids moléculaire moyen en poids de 10 000 à 80 000 (dispersant A), et un dispersant polymère ayant un poids moléculaire moyen en poids de 100 000 à 200 000 (dispersant B).

2. Composition d'encre pour jet d'encre selon la revendication 1, dans laquelle le dispersant A et le dispersant B sont des dispersants polymères ayant un groupe amino sur une chaîne principale ou une chaîne latérale, respectivement.

3. Composition d'encre pour jet d'encre selon la revendication 1 ou 2, dans laquelle le dispersant B est un dispersant polymère ayant un motif constitutif représenté par la formule (1) suivante : 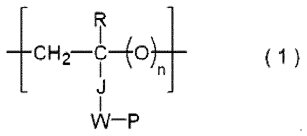 dans la formule (1), R représente un atome d'hydrogène ou un groupe méthyle, J représente -CO-, -COO-, -OCO-, un groupe méthylène ou un groupe phénylène, n représente 0 ou 1, W représente une simple liaison ou un groupe de liaison divalent, et P représente un résidu de type pigment obtenu en retirant un atome d'hydrogène de la structure choisi dans le groupe constitué par la quinacridone, la benzimidazolone, l'indole, la quinoline, le carbazole, l'acridine, l'acridone, l'anthraquinone, le phtalimide, et le naphtalimide.

4. Composition d'encre pour jet d'encre selon la revendication 3, dans laquelle P est un résidu de type pigment obtenu en retirant un atome d'hydrogène de la structure choisi dans le groupe constitué par l'acridone et le phtalimide.

5. Composition d'encre pour jet d'encre selon l'une quelconque des revendications 1 à 4, dans laquelle le dispersant A est un dispersant polymère qui n'a pas une structure choisie dans le groupe constitué par la quinacridone, la benzimidazolone, l'indole, la quinoline, le carbazole, l'acridine, l'acridone, l'anthraquinone, le phtalimide, et le naphtalimide.

6. Composition d'encre pour jet d'encre selon l'une quelconque des revendications 1 à 5, comprenant en outre :
au moins un composant choisi dans le groupe constitué par le N-vinylcaprolactame, l'acrylate de 2-phénoxyéthyle, et l'acrylate de 2-(2-éthoxyéthoxy)éthyle,
la teneur totale en N-vinylcaprolactame, acrylate de 2-phénoxyéthyle et acrylate de 2-(2-éthoxyéthoxy)éthyle étant d'au moins 20 % en masse, par rapport à la masse totale de la composition d'encre pour jet d'encre.

7. Composition d'encre pour jet d'encre selon l'une quelconque des revendications 1 à 6, dans laquelle le pigment organique est un pigment à base de bisacéto-acétarylide.

8. Composition d'encre pour jet d'encre selon la revendication 7, dans laquelle le pigment à base de bisacétoacétarylide est un pigment jaune 155.

9. Composition d'encre pour jet d'encre selon l'une quelconque des revendications 1 à 8, comprenant en outre un initiateur de polymérisation.

10. Procédé de production d'une composition d'encre pour jet d'encre non aqueuse, durcissable par voie radicalaire comprenant :
le mélange d'un dispersant polymère (dispersant A) ayant un poids moléculaire moyen en poids de 10 000 à 80 000, d'un composé polymérisable, et d'un pigment à base de benzimidazolone ou d'un pigment à base de bisacétoacétarylide pour préparer un liquide de dispersion préliminaire A ayant une concentration de pigment de 20 à 40 % en masse ;
la soumission du liquide de dispersion préliminaire A à un traitement de dispersion de pigment pour préparer un liquide de dispersion de pigment A ayant un diamètre de particules moyen en volume du pigment de 300 nm ou moins ; et
le mélange d'un dispersant polymère (dispersant B) ayant un poids moléculaire moyen en poids de 100 000 à 200 000 avec le liquide de dispersion de pigment A.

11. Procédé de production d'une composition d'encre pour jet d'encre selon la revendication 10, dans lequel le dispersant A et le dispersant B sont des dispersants polymères ayant un groupe amino sur une chaîne principale ou une chaîne latérale, respectivement.

12. Procédé de production d'une composition d'encre pour jet d'encre selon la revendication 10 ou 11, dans lequel le dispersant B est un dispersant polymère ayant un motif constitutif représenté par la formule (1) suivante : 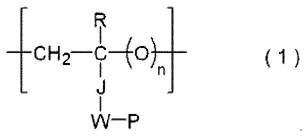 dans la formule (1), R représente un atome d'hydrogène ou un groupe méthyle, J représente -CO-, -COO-, -OCO-, un groupe méthylène ou un groupe phénylène, n représente 0 ou 1, W représente une simple liaison ou un groupe de liaison divalent, et P représente un résidu de type pigment obtenu en retirant un atome d'hydrogène de la structure choisi dans le groupe constitué par la quinacridone, la benzimidazolone, l'indole, la quinoline, le carbazole, l'acridine, l'acridone, l'anthraquinone, le phtalimide, et le naphtalimide.

13. Procédé de production d'une composition d'encre pour jet d'encre selon la revendication 12, dans lequel P est un résidu de type pigment obtenu en retirant un atome d'hydrogène de la structure choisi dans le groupe constitué par l'acridone et le phtalimide.

14. Procédé de production d'une composition d'encre pour jet d'encre selon l'une quelconque des revendications 10 à 13, dans lequel le dispersant A est un dispersant polymère qui n'a pas une structure choisie dans le groupe constitué par la quinacridone, la benzimidazolone, l'indole, la quinoline, le carbazole, l'acridine, l'acridone, l'anthraquinone, le phtalimide, et le naphtalimide.

15. Procédé d'impression par jet d'encre comprenant :
(a¹) l'éjection de la composition d'encre pour jet d'encre selon l'une quelconque des revendications 1 à 9 ou de la composition d'encre pour jet d'encre préparée par le procédé selon l'une quelconque des revendications 10 à 14 sur un support à imprimer ; et
(b¹) l'irradiation de la composition d'encre pour jet d'encre éjectée avec un rayonnement actif pour durcir la composition d'encre pour jet d'encre.
